# EUROPEAN PATENT APPLICATION

(11) **EP 4 530 845 A1**
(43) Date of publication of application: **02.04.2025**
(21) Application number: 24194569.0
(22) Date of filing: 14.08.2024
(51) Int. Cl.: G06F 9/50, G06N 3/004, G06N 3/045

(54) **MANAGING COMPUTATIONAL RESOURCES**

(30) Priority: 29.09.2023 US 202363586748 P; 05.01.2024 US 202463618165 P; 05.08.2024 US 202418794966
(71) Applicant: Palantir Technologies Inc., Denver, CO 80202 (US)
(72) Inventor: SCHRADER, Max-Philipp, Denver, 80202 (US); KRISHNAN, Sriram, Denver, 80202 (US); ARORA, Megha, Denver, 80202 (US); TYSHEVSKYI, Pavlo, Denver, 80202 (US); BEIL, Johannes, Denver, 80202 (US); EDWARDS, Alexander, Denver, 80202 (US); KEBUDI, David, Denver, 80202 (US); EVANS, Montgomery, Denver, 80202 (US); MUKHERJEE, Anirvan, Denver, 80202 (US)
(74) Representative: Sayer, Robert David

(57) **Abstract**

Computer-implemented systems and methods are disclosed, including systems and methods for automatically solving computational tasks or problems. A computer-implemented method may include: providing an agent service that utilizes a plurality of agents to process one or more tasks; receiving, by a first agent, a request to handle a first task; obtaining, by the first agent, a first accessory to handle the first task; assigning, by the first agent, at least a portion of the first task to a second agent; sharing, by the first agent, the first accessory to the second agent; and processing, by the second agent, at least the portion of the first task using the first accessory to generate a processing result.

## Description

### TECHNICAL FIELD

The present disclosure relates to systems and techniques for managing computational resources which may involve utilizing computer-based models. More specifically, the present disclosure relates to computerized systems and techniques for managing computational resources of artificial intelligence powered agents.

### BACKGROUND

The approaches described in this section are approaches that could be pursued, but not necessarily approaches that have been previously conceived or pursued. Therefore, unless otherwise indicated, it should not be assumed that any of the approaches described in this section qualify as prior art merely by virtue of their inclusion in this section.

Computers can be programmed to perform calculations and operations utilizing one or more computer-based models. For example, agents (e.g., artificial intelligence (AI) powered agents) can be deployed by computing systems to solve various problems.

### SUMMARY

The systems, methods, and devices described herein each have several aspects, no single one of which is solely responsible for its desirable attributes. Without limiting the scope of this disclosure, several non-limiting features will now be described briefly. For ease of discussion, certain embodiments described herein relate to using a plurality of agents to automatically solve complex computational tasks (e.g., data analysis) or problems through coordination among the plurality of agents without being constrained by capabilities of individual agents.

The present disclosure relates to systems and methods (generally collectively referred to herein as "an agent system" or simply a "system") that can advantageously overcome various of the technical challenges mentioned above, among other technical challenges. The present disclosure further includes various processes, functionality, and interactive graphical user interfaces related to the system. According to various implementations, the system (and related processes, functionality, and interactive graphical user interfaces), can advantageously employ a plurality of agents to automatically solve complex computational tasks or problems through coordination among the plurality of agents. Advantageously, the system enables agents to coordinate (e.g., handoff a task from one agent to another) with each other to effectively solve such computational tasks problems in both time and resource efficient manners. In this context, example embodiments may relate to resource allocation. For example, a first agent may be incapable of performing a particular computational task or may be capable of performing the particular computational task but in a relatively inefficient way compared to a second agent. For example, the first agent may be run using a first processor and the second agent may be run using a second processor which has different technical characteristics to the first processor, for example a faster processing speed and/or internal memory than the first processor. Alternatively, or additionally, the first agent may be run using a first processor that has the same or substantially the same technical characteristics as the second processor but which is currently running one or more other computational tasks, meaning that the second processor has greater computational capability than the first processor at the present time. For example, the second agent may be run on the same or different processor as the first agent, but is configured, programmed or trained to perform certain processing tasks which is or are different (e.g., more specialized) than the first agent such that the second agent will provide a more accurate result, a quicker result and/or using less processing and/or memory resources. For example, the first agent may be configured, programmed or trained to perform a relatively broad range of computations whereas the second agent may be configured, programmed or trained to perform a relatively specific (narrower) range of computations. For example, the second agent may be trained using a larger corpus of training data in a specific field than the first agent, meaning that the second agent may provide both a more accurate result but may arrive at its result quicker and using less processing resources. Additionally, information useful for processing tasks or solving problems can be effectively and reliably shared among agents through the system while respecting security and/or permissioning defined by the system and/or users. Further, the system may provide user interface(s) that allow users to track or monitor problem solving processes went through by agents to evaluate the soundness of steps taken or decisions made by agents. The system may further allow users to configure agents based on various user objectives to enhance scalability and reusability of the system.

Various embodiments of the present disclosure provide improvements to various technologies and technological fields. For example, as described above, the system may advantageously utilize agents that coordinate with each other to automatically solve more complex computational tasks or problems without being constrained by capabilities of individual agents, thereby improving performance and accuracy of the system. Other technical benefits provided by various embodiments of the present disclosure include, for example, enabling agents to effectively and reliably share information useful for solving computational tasks or problems while respecting security defined by the system and/or users, or providing user interfaces to allow users to track or monitor computational tasks or problem solving processes went through by agents to facilitate efficient evaluation on performances of agents.

Additionally, various embodiments of the present disclosure are inextricably tied to computer technology. In particular, various embodiments rely on detection of user inputs via graphical user interfaces, calculation of updates to displayed electronic data based on those user inputs, automatic processing of related electronic data, application of language models and/or other artificial intelligence, and presentation of the updates to displayed information via interactive graphical user interfaces. Such features and others (e.g., processing and analysis of large amounts of electronic data) are intimately tied to, and enabled by, computer technology, and would not exist except for computer technology. For example, the interactions with displayed data described below in reference to various embodiments cannot reasonably be performed by humans alone, without the computer technology upon which they are implemented. Further, the implementation of the various embodiments of the present disclosure via computer technology enables many of the advantages described herein, including more efficient interaction with, and presentation of, various types of electronic data.

According to various implementations, large amounts of data are automatically and dynamically calculated interactively in response to user inputs, and the calculated data is efficiently and compactly presented to a user by the system. Thus, in some implementations, the user interfaces described herein are more efficient as compared to previous user interfaces in which data is not dynamically updated and compactly and efficiently presented to the user in response to interactive inputs.

Further, as described herein, the system may be configured and/or designed to generate user interface data useable for rendering the various interactive user interfaces described. The user interface data may be used by the system, and/or another computer system, device, and/or software program (for example, a browser program), to render the interactive user interfaces. The interactive user interfaces may be displayed on, for example, electronic displays (including, for example, touch-enabled displays).

Additionally, it has been noted that design of computer user interfaces that are useable and easily learned by humans is a non-trivial problem for software developers. The present disclosure describes various implementations of interactive and dynamic user interfaces that are the result of significant development. This non-trivial development has resulted in the user interfaces described herein which may provide significant cognitive and ergonomic efficiencies and advantages over previous systems. The interactive and dynamic user interfaces include improved human-computer interactions that may provide reduced mental workloads, improved decision-making, reduced work stress, and/or the like, for a user. For example, user interaction with the interactive user interface via the inputs described herein may provide an optimized display of, and interaction with, models and model-related data, and may enable a user to more quickly and accurately access, navigate, assess, and digest the model-related data than previous systems.

Further, the interactive and dynamic user interfaces described herein are enabled by innovations in efficient interactions between the user interfaces and underlying systems and components. For example, disclosed herein are improved methods for employing agents to automatically solve complex computational tasks or problems through coordination among the agents. Advantageously, the system enables agents to coordinate (e.g., handoff a task from one agent to another) with each other to effectively solve computational tasks or problems in both time and resource efficient manners. Furthermore, information useful for processing computational tasks or solving problems can be effectively and reliably shared among agents through the system while respecting security and/or permissioning defined by the system and/or users. Additionally, the system may provide user interface(s) that allow users to track or monitor problem solving processes went through by agents to evaluate the soundness of steps taken or decisions made by agents, or further allow users to configure agents based on various user objectives to enhance scalability and reusability of the system.

Thus, various implementations of the present disclosure can provide improvements to various technologies and technological fields, and practical applications of various technological features and advancements. For example, as described above, existing computer-based model management and integration technology is limited in various ways, and various implementations of the disclosure provide significant technical improvements over such technology. Additionally, various implementations of the present disclosure are inextricably tied to computer technology. In particular, various implementations rely on operation of technical computer systems and electronic data stores, automatic processing of electronic data, and the like. Such features and others (e.g., processing and analysis of large amounts of electronic data, management of data migrations and integrations, and/or the like) are intimately tied to, and enabled by, computer technology, and would not exist except for computer technology. For example, the interactions with, and management of, computer-based models described below in reference to various implementations cannot reasonably be performed by humans alone, without the computer technology upon which they are implemented. Further, the implementation of the various implementations of the present disclosure via computer technology enables many of the advantages described herein, including more efficient management of various types of electronic data (including computer-based models).

Various combinations of the above and below recited features, embodiments, implementations, and aspects are also disclosed and contemplated by the present disclosure.

Additional implementations of the disclosure are described below in reference to the appended claims, which may serve as an additional summary of the disclosure.

In various implementations, systems and/or computer systems are disclosed that comprise a computer-readable storage medium having program instructions embodied therewith, and one or more processors configured to execute the program instructions to cause the systems and/or computer systems to perform operations comprising one or more aspects of the above- and/or below-described implementations (including one or more aspects of the appended claims).

In various implementations, computer-implemented methods are disclosed in which, by one or more processors executing program instructions, one or more aspects of the above- and/or below-described implementations (including one or more aspects of the appended claims) are implemented and/or performed.

In various implementations, computer program products comprising a computer-readable storage medium are disclosed, wherein the computer-readable storage medium has program instructions embodied therewith, the program instructions executable by one or more processors to cause the one or more processors to perform operations comprising one or more aspects of the above- and/or below-described implementations (including one or more aspects of the appended claims).

### BRIEF DESCRIPTION OF THE DRAWINGS

The following drawings and the associated descriptions are provided to illustrate implementations of the present disclosure and do not limit the scope of the claims. Aspects and many of the attendant advantages of this disclosure will become more readily appreciated as the same become better understood by reference to the following detailed description, when taken in conjunction with the accompanying drawings, wherein:
FIG. 1A is a block diagram illustrating an example agent system in an example computing environment;
FIG. 1B depicts an example block diagram of the agent system of FIG. 1A, where the agent system can be utilized to automatically solve complex problems received from users;
FIG. 2A illustrates an object-centric conceptual data model, according to various embodiments of the present disclosure;
FIG. 2B is a block diagram illustrating an example interaction data object in accordance with various embodiments of the present disclosure;
FIG. 3 depicts a flowchart illustrating an example method for processing tasks through coordination among agents of the agent system of FIGS. 1A-1B according to various embodiments of the present disclosure;
FIG. 4 is an example flowchart depicting an example method for managing storage of an accessory in an agent storage of the agent system of FIGS. 1A-1B according to various embodiments of the present disclosure;
FIG. 5 is an example flowchart depicting an example method for facilitating communications between an agent and a user according to various embodiments of the present disclosure;
FIGS. 6, 7, 8A, 8B, 9, and 10 are illustrations of example user interfaces of the agent system of FIGS. 1A-1B according to various embodiments of the present disclosure;
FIG. 11 is a block diagram of an example computer system consistent with various implementations of the present disclosure.

### DETAILED DESCRIPTION

Although certain preferred implementations, embodiments, and examples are disclosed below, the inventive subject matter extends beyond the specifically disclosed implementations to other alternative implementations and/or uses and to modifications and equivalents thereof. Thus, the scope of the claims appended hereto is not limited by any of the particular implementations described below. For example, in any method or process disclosed herein, the acts or operations of the method or process may be performed in any suitable sequence and are not necessarily limited to any particular disclosed sequence. Various operations may be described as multiple discrete operations in turn, in a manner that may be helpful in understanding certain implementations; however, the order of description should not be construed to imply that these operations are order dependent. Additionally, the structures, systems, and/or devices described herein may be embodied as integrated components or as separate components. For purposes of comparing various implementations, certain aspects and advantages of these implementations are described. Not necessarily all such aspects or advantages are achieved by any particular implementation. Thus, for example, various implementations may be carried out in a manner that achieves or optimizes one advantage or group of advantages as taught herein without necessarily achieving other aspects or advantages as may also be taught or suggested herein.

To facilitate an understanding of the systems and methods discussed herein, several terms are described below and throughout this specification. These terms, as well as other terms used herein, should be construed to include the provided descriptions, the ordinary and customary meanings of the terms, and/or any other implied meaning for the respective terms, wherein such construction is consistent with context of the term. Thus, the descriptions below do not limit the meaning of these terms, but only provide example descriptions.

The term "agent," as used in the present disclosure, can refer to a computational decision making entity that is designed to be specialized at solving a class of computational tasks or problems, or an entity that can execute certain tools to solve specific computational tasks or problems. The class of computational tasks or problems that a particular agent can solve can include simple (e.g., sending a single request to a large language model (LLM) service) or more complex ones (e.g., chaining a set of tools behind each other in a dynamic fashion to solve a complex problem). In some implementations, an agent can be defined by a specific combination of computational building blocks including one or more of: (1) agent logic: a core programmatic definition on how this specific agent should interact with the available tools, configurations, and the user; (2) tools: a defined set of tools available for the specific agent; (3) guardrails: a core security mechanism to control the interaction of the agent with the system, such as permissions regarding ontology access; and (4) agent storage (herein also referred to as "agent memory"): a data store and/or memory space allowing an individual agent to keep track of relevant information (e.g., messages and accessories) during and across runs.

The term "configuration," as used in the present disclosure, can refer to a version-controlled specification of pointers to the building blocks of an agent and/or versions of the building blocks. For example, an agent can be configured to a specific configuration that associates the agent with a specific ontology, a LLM, one or more tools, one or more accessories, or the like.

The term "coordinator," as used in the present disclosure, can refer to an entity that manages interactions among other entities. For example, the term "agent coordinator" can refer to an entity that manages interactions among agents deployed by an agent system. The agent coordinator may serve a role similar to a control tower to ensure agents act in coordination with each other in an intentional manner. For example, an agent coordinator may supervise handoffs of problems, tasks, or sub-tasks among agents to ensure handoffs are robustly performed and do not interfere with processing of other tasks or sub-tasks.

The term "**tool**," as used in the present disclosure, can refer to a specific capability that is available to an agent to solve a given problem. In its core, a tool may be mostly responsible to perform a deterministic action. A tool may allow an agent to interact with the operational system, an ontology, internal databases and system, and/or external systems. A tool can be any set of logic or rules that can be provided to an agent for the agent's use, such as to obtain additional information by generating a request for access to additional data via a plug-in. Thus, a tool can be used by an agent to generate requests (that may be fulfilled by the system) to perform operations such as querying datasets, processing data including filtering or aggregating data, writing to datasets (e.g., adding or updating rows of a table, editing or updating an object type, updating parameter values for an object instance, generating a new object instance), implementing integrated applications (e.g., an email or SMS application), communicating with external application programming interfaces (APIs), and/or any other functions that communicate with other external or internal components. Example tools include ontology function tool, date/time tool, query objects tool, calculator tool, and apply action tool. Tools, or the set of logic they comprise for performing one or more operations, may be defined by a system, external database, ontology and/or a user.

The term "**run**," as used in the present disclosure, can refer to a full interaction of a user with an agent system in performance of a task, such as one or more interactions with an LLM and/or external data source. An individual run can refer to a full interaction of the user with the agent system, or a user session operated by the user. Information associated with a run may be stored by an agent system to facilitate automation orientation and/or co-pilot orientation. The information related to the individual run may include the initial prompt and subsequent prompts received by the agent from the user, starting and end timestamps of the individual run, status (e.g., completed, succeeded, failed, or the like) of the individual run, timelines of occurrence of events while the agent executing the individual run, intermediate results generated by the agent, child-agents to which the agent handoffs tasks, number of errors committed by the agent when utilizing some tools, or the like.

The term "**accessory**," as used in the present disclosure, can refer to any information, for example computer-readable information, that may be useful or necessary for agents to process tasks. An accessory may be known to be correct to an agent system. Accessories may come in various forms and may include any types of electronic data, such as text, files, documents, books, manuals, emails, images, audio, video, databases, metadata, positional data (e.g., geo-coordinates), sensor data, web pages, time series data, and/or any combination of the foregoing and/or the like. An accessory may be permissioned and/or subject to various security constraints such that the accessory may be accessible to some agents but inaccessible to other agents. Accessories may be generated or created by agents during processing tasks, but may also be provided by users based on demands of users. Example accessories may include: (a) the calculated sum of items in an inventory, (b) an identification (ID) of a document containing needed information, (c) a result of a system operation, such as creation of a new user. Accessories may be stored as Objects in an ontology or in other data formats. Accessories may be multi-modal. Accessories can be of simple types, such as string, double, integer, or the like, and can also be of more complex types, such as images, dataframes, sound files, or the like. Accessories can be created by agents and/or by users of an agent system. For example, as part of executing a run, an agent may utilize a set of tools to create new accessories. As another example, before starting a run, users can select relevant existing accessories and/or create new accessories that contain relevant information for the specific problems to be solved. An agent system can track a lineage of an accessory to know, for example, which accessories were used by which tools to create the accessory.

The term "**model**," as used in the present disclosure, can include any computer-based models of any type and of any level of complexity, such as any type of sequential, functional, or concurrent model. Models can further include various types of computational models, such as, for example, artificial neural networks ("NN"), language models (e.g., large language models ("LLMs")), artificial intelligence ("AI") models, machine learning ("ML") models, multimodal models (e.g., models or combinations of models that can accept inputs of multiple modalities, such as images and text), and/or the like. A "nondeterministic model" as used in the present disclosure, is any model in which the output of the model is not determined solely based on an input to the model. Examples of nondeterministic models include language models such as LLMs, ML models, and the like.

A "**language model** is any algorithm, rule, model, and/or other programmatic instructions that can predict the probability of a sequence of words. A language model may, given a starting text string (e.g., one or more words), predict the next word in the sequence. A language model may calculate the probability of different word combinations based on the patterns learned during training (based on a set of text data from books, articles, websites, audio files, etc.). A language model may generate many combinations of one or more next words (and/or sentences) that are coherent and contextually relevant. Thus, a language model can be an advanced artificial intelligence algorithm that has been trained to understand, generate, and manipulate language. A language model can be useful for natural language processing, including receiving natural language prompts and providing natural language responses based on the text on which the model is trained. A language model may include an n-gram, exponential, positional, neural network, and/or other type of model.

A Large Language Model ("**LLM**") is any type of language model that has been trained on a larger data set and has a larger number of training parameters compared to a regular language model. An LLM can understand more intricate patterns and generate text that is more coherent and contextually relevant due to its extensive training. Thus, an LLM may perform well on a wide range of topics and tasks. LLMs may work by taking an input text and repeatedly predicting the next word or token (e.g., a portion of a word, a combination of one or more words or portions of words, punctuation, and/or any combination of the foregoing and/or the like). An LLM may be of any type, including a Question Answer ("QA") LLM that may be optimized for generating answers from a context, a multimodal LLM/model, and/or the like. An LLM (and/or other models of the present disclosure) may include, for example, a NN trained using self-supervised learning and/or semi-supervised learning, a feedforward NN, a recurrent NN, and/or the like. An LLM (and/or other models of the present disclosure) may further include, for example, attention-based and/or transformer architecture or functionality.

While certain aspects and implementations are discussed herein with reference to use of a language model, LLM, and/or AI, those aspects and implementations may be performed by any other language model, LLM, AI model, generative AI model, generative model, ML model, NN, multimodal model, and/or other algorithmic processes. Similarly, while certain aspects and implementations are discussed herein with reference to use of a ML model, language model, or LLM, those aspects and implementations may be performed by any other AI model, generative AI model, generative model, NN, multimodal model, and/or other algorithmic processes.

In various implementations, the LLMs and/or other models (including ML models) of the present disclosure may be locally hosted, cloud managed, accessed via one or more Application Programming Interfaces ("APIs"), and/or any combination of the foregoing and/or the like. Additionally, in various implementations, the LLMs and/or other models (including ML models) of the present disclosure may be implemented in or by electronic hardware such application-specific processors (e.g., application-specific integrated circuits ("ASICs")), programmable processors (e.g., field programmable gate arrays ("FPGAs")), application-specific circuitry, and/or the like. Data that may be queried using the systems and methods of the present disclosure may include any type of electronic data, such as text, files, documents, books, manuals, emails, images, audio, video, databases, metadata, positional data (e.g., geo-coordinates), geospatial data, sensor data, web pages, time series data, and/or any combination of the foregoing and/or the like. In various implementations, such data may comprise model inputs and/or outputs, model training data, modeled data, and/or the like.

Examples of models, language models, and/or LLMs that may be used in various implementations of the present disclosure include, for example, Bidirectional Encoder Representations from Transformers (BERT), LaMDA (Language Model for Dialogue Applications), PaLM (Pathways Language Model), PaLM 2 (Pathways Language Model 2), Generative Pre-trained Transformer 2 (GPT-2), Generative Pre-trained Transformer 3 (GPT-3), Generative Pre-trained Transformer 4 (GPT-4), LLaMA (Large Language Model Meta AI), and BigScience Large Open-science Open-access Multilingual Language Model (BLOOM).

A "**user operation**" (or "**User Input**") can be any operations performed by one or more users to user interface(s) and/or other user input devices associated with a system (e.g., the data extraction system). User operations can include, for example, select, drag, move, group, or the like, nodes or edges of one or more interactive graphical representations for updating an ontology based on unmatched classified triples represented by the nodes or the edges. User operations can also include, for example, selecting an unmatched triple displayed in a list and identify one or more issues associated with the unmatched triple. User operations (e.g., input a text data to the data extraction system) can also prompt a task to be performed, such as by an LLM, in whole or in part.

A "**prompt**" (or "**natural language prompt**" or "**model input**") can be, for example, a term, phrase, question, and/or statement written in a human language (e.g., English, Chinese, Spanish, and/or the like), and/or other text string, that may serve as a starting point for a language model and/or other language processing. A prompt may include only a user input or may be generated based on a user input, such as by a prompt generation module (e.g., of a document search system) that supplements a user input with instructions, examples, and/or information that may improve the effectiveness (e.g., accuracy and/or relevance) of an output from the language model. A prompt may be provided to an LLM which the LLM can use to generate a response (or "model output").

An "**ontology**" can include stored information that provides a data model for storage of data in one or more databases and/or other data stores. For example, the stored data may include definitions for data object types and respective associated property types. An ontology may also include respective link types/definitions associated with data object types, which may include indications of how data object types may be related to one another. An ontology may also include respective actions associated with data object types or data object instances. The actions may include defined changes to values of properties based on various inputs. An ontology may also include respective functions, or indications of associated functions, associated with data object types, which functions may be executed when a data object of the associated type is accessed. An ontology may constitute a way to represent things in the world. An ontology may be used by an organization to model a view on what objects exist in the world, what their properties are, and how they are related to each other. An ontology may be user-defined, computer-defined, or some combination of the two. An ontology may include hierarchical relationships among data object types. An ontology may be used by an organization to model a view of, or provide a template for, what objects exist in the world, what their properties are, and how they are related to each other.

A "**data object**" (or "object" or "data object instance") can be a data container for information representing a specific thing in the world that has a number of definable properties. For example, a data object can represent an interaction (e.g., recording events occurred during the interaction) between a user and an agent system. A data object can represent an entity such as a person, a place, an organization, a market instrument, or other noun. A data object can represent an event that happens at a point in time or for a duration. A data object can represent a document or other unstructured data source such as an e-mail message, a news report, or a written paper or article. Each data object may be associated with a unique identifier that uniquely identifies the data object. The obj ect's attributes (also referred to as "contents") may be represented in one or more properties. Attributes may include, for example, metadata about an object, such as a geographic location associated with the item, a value associated with the item, a probability associated with the item, an event associated with the item, and so forth. A data object may be of a data object type, where the data object is stored in a database that is associated with an ontology that defines the data object type.

A **"data object type"** (or "object type") can be a type of a data object (e.g., person, event, document, and/or the like). Data object types may be defined by an ontology and may be modified or updated to include additional object types. A data object definition (e.g., in an ontology) may include how the data object is related to other data objects, such as being a sub-data object type of another data object type (e.g., an agent may be a sub-data object type of a person data object type), and the properties the data object type may have.

A **"data store"** can be any computer-readable storage medium and/or device (or collection of data storage mediums and/or devices). Examples of data stores include, but are not limited to, optical disks (e.g., CD-ROM, DVD-ROM, and the like), magnetic disks (e.g., hard disks, floppy disks, and the like), memory circuits (e.g., solid state drives, random-access memory (RAM), and the like), and/or the like. Another example of a data store is a hosted storage environment that includes a collection of physical data storage devices that may be remotely accessible and may be rapidly provisioned as needed (commonly referred to as "cloud" storage). According to various implementations, any data storage, data stores, databases, and/or the like described in the present disclosure may, in various implementations, be replaced by appropriate alternative data storage, data stores, databases, and/or the like.

A **Database** can be any data structure (and/or combinations of multiple data structures) for storing and/or organizing data, including, but not limited to, relational databases (e.g., Oracle databases, PostgreSQL databases, MySQL databases, and the like), non-relational databases (e.g., NoSQL databases, and the like), in-memory databases, spreadsheets, comma separated values (CSV) files, eXtensible markup language (XML) files, TeXT (TXT) files, flat files, spreadsheet files, and/or any other widely used or proprietary format for data storage. Databases are typically stored in one or more data stores. Accordingly, each database referred to herein (e.g., in the description herein and/or the figures of the present application) can be understood as being stored in one or more data stores. Additionally, although the present disclosure may show or describe data as being stored in combined or separate databases, in various implementations such data may be combined and/or separated in any appropriate way into one or more databases, one or more tables of one or more databases, and/or the like. According to various implementations, any database(s) described in the present disclosure may be replaced by appropriate data store(s). Further, data source(s) of the present disclosure may include one or more databases, one or more tables, one or more data sources, and/or the like, for example.

### Overview

An agent (e.g., an artificial intelligence (AI) powered agent) can be deployed by a computing system to solve various problems, such as sending requests to a LLM service in performance of a task. However, an agent that is well-trained to solve a generic problem may require further substantial re-training to efficiently, in terms of time and/or hardware and/or software resources, solve a specific computational task or problem that is derived from the generic problem. Additionally, there may be no effective mechanisms for sharing useful information or tools obtained and utilized by an agent to solve a problem with another agent that is tasked to solve a similar problem. As such, efforts expended by an agent may not be leveraged by another agent. Further, when an agent processes a task to generate a result, it may be difficult to evaluate whether the result is sensible or reliable because the steps taken by the agent to process the task usually may not be available for effective supervision or verification. These characteristics of agents may make them less efficient, accurate, or flexible in solving certain problems.

As discussed herein, agents may be configured to efficiently solve both simple and complex computational tasks or problems. The present disclosure describes example systems and methods (generally collectively referred to herein as "an agent system" or simply a "system") that can advantageously overcome various of the technical challenges mentioned above, among other technical challenges. The present disclosure further includes various processes, functionality, and interactive graphical user interfaces related to the system. According to various implementations, the system (and related processes, functionality, and interactive graphical user interfaces), can advantageously employ a plurality of agents to automatically solve complex computational tasks or problems through coordination among the plurality of agents. Advantageously, the system enables agents to coordinate (e.g., handoff a task from one agent to another) with each other to effectively solve computational tasks or problems in both time and resource efficient manners. Additionally, information useful for processing tasks or solving problems can be effectively and reliably shared among agents through the system while respecting security and/or permissioning defined by the system and/or users. Further, the system may provide user interface(s) that allow users to track or monitor computational task or problem solving processes went through by agents to evaluate the soundness of steps taken or decisions made by agents. The system may further allow users to configure agents based on various user objectives to enhance scalability and reusability of the system.

### Agent Configurations

Agents deployed in an agent system (or AI system) may be configurable based on various settings or parameters. Agents in the system may share one or more common building blocks (e.g., an agent logic that defines how agents operate and/or interact with each other, tools, and/or users) but may be configured to various configurations by the system and/or users. In some implementations, an agent can be configured or reconfigured to be associated with various ontologies, large language models (LLMs), tools, accessories, storages, or the like. For example, a first configuration of an agent may associate the agent with a first set of ontologies, LLMs, tools, accessories, and storages and a second configuration of the agent may associate the agent with a second set of ontologies, LLMs, tools, accessories, and storages. The system may flexibly (e.g., based on user demands) reconfigure an agent from one configuration to another configuration. Advantageously, reconfigurable agents enable the system to swap or switch agent configurations for achieving various objectives. For example, the system may feed the same input(s) to two agents that are configured the same except LLMs utilized by the two agents to evaluate or benchmark performances of the LLMs. As another example, when an agent is tasked to solve a problem related to a new subject matter, the system and/or users may reconfigure the agent to utilize an ontology that is created or updated based on the new subject matter.

In some implementations, configurations of an agent can be version controlled by the system. For example, the system may assign version numbers (e.g., a string of text) to corresponding configurations of agents and keep track of configurations of agents using version numbers. More specifically, a first configuration of an agent may be assigned or identified by a first version number and a second configuration of the agent may be assigned or identified by a second version number. Additionally and/or optionally, the system may assign identification numbers (IDs) to components (e.g., one or more ontologies, LLMs, tools, and storages) of configurations of agents. For example, a first LLM and a first ontology in a first configuration of a first agent may be assigned a first LLM ID and a first ontology ID, and a second LLM and a second ontology in a second configuration of a second agent may be assigned a second LLM ID and a second ontology ID. Advantageously, version controlled configurations and/or IDs assigned to components of configurations may allow the system robustly and effectively track operations of agents, adapt agents among various configurations, or contrast strengths and weakness of an agent when operating under disparate configurations. In various implementations, the system may utilize pointers to access or point to an ontology, LLM(s), tool(s), accessory, storage(s), or one or more configurations associated with the agent.

Additionally, the system may generate and maintain a log to record events, timelines, received inputs, or generated outputs while an agent processes tasks. The log may describe events that occurred while the agent processes tasks and corresponding timestamps, inputs received from users and/or the system, and/or results generated by the agent while processing tasks. In various implementations, the log may record number of errors committed by the agent while processing tasks. Advantageously, the log may allow the system or users to effectively monitor or evaluate performances of agents for taking appropriate measures (e.g., re-train an agent for processing a particular type of task in response to monitoring a high error number from the agent while processing the particular type of task).

### Agent Handoffs

Agents may be configured to coordinate with each other to process tasks collaboratively. In some implementations, agents may coordinate with other agents by handing off tasks (e.g., a partially completed task) to other agents that are suitable or specialized in performing a next step in the tasks. For example, when an agent determines that a task which the agent is processing requires specialized capability, for example in terms of a particular ontology, LLM, tools, accessories, agent storage, or other aspects of an agent, the agent may handoff some or all of the task to another agent that has been trained or tested to efficiently solve the task. For example, a first agent may comprise settings including a first configuration that indicates or specifies that it is suitable or specialized in performing a first type or first group of tasks and less specialized in performing at least a second type or second group of tasks. For example, a second agent may comprise settings including a second configuration that indicates or specifies that it is suitable or specialized in performing the second type or second group of tasks and, possibly, that it is less specialized in performing at least the first type or first group of tasks. The first and second configurations may be provided in metadata or other formats stored by, or at least accessible to, the first and second agents. The term less specialized may refer to an agent being capable of performing a type of task but in a less processing efficient manner than a more specialized agent, for example because it requires extra data or a manual intervention by a user. For example, for a video processing task involving both video and audio content, a first agent may comprise a first configuration that indicates that it is more capable of, or specialized for, performing image and video processing tasks (e.g., because it comprises or has access to various types of image-based models, libraries, and/or codecs) but less capable of, or specialized for, performing related audio processing tasks relative to a second agent. For example, the second agent may have a configuration that indicates that it has access to various types of audio-based models, libraries and./or codecs that means that the second agent will be able to handle the audio processing in a more computationally efficient manner than the first agent which handles the image/video processing tasks better than the second agent. For example, the first agent may know in advance, or have access to, the configuration of the second agent, and can determine based on, for example, the metadata of said configuration that it should hand-off the audio processing task (or sub-task) to the second agent. The resulting processed video and audio data can be merged or combined by either the first agent, the second agent or a third agent. Other use cases can be envisaged other than video and/or audio processing, for example tasks involving two or more sub-tasks that involve different types of processing. These tasks may involve language-based tasks and sub-tasks, examples of which are given below.

In various implementations, an agent may handoff some (e.g., sub-tasks) or all of a task to one or more child agents which may be specialized in processing specific types of tasks or sub-tasks. The parent-child agent relationship can be configurable. For example, an agent can be configured to have child agent(s) and the child agent(s) may be explicitly specified in a configuration of the agent, where a configuration of the child agent(s) may also explicitly specify the agent as a parent agent. As such, the parent-child agent relationship(s) can be bi-directional. An agent can be a parent of another agent, and can also be a child of still another agent. Advantageously, handing off tasks to child agents provides multiple improvements over utilizing a single and large agent to process tasks. For example, handing off sub-tasks to child agents that have been proven to process the sub-tasks efficiently enables the system to effectively process requests from users to return accurate and reliable results. Handing off tasks may further reduce the update or maintenance cost of agents of the system because updates on or migration of agents can be targeted and tailored toward subsets of agents of the system.

When an agent (or coordinator, as discussed further below) determines that handoff of a sub-task to a child agent should occur, the agent (and/or coordinator) may identify information to provide to the child agent to aid in performance of the sub-task. For example, an agent may select one or more accessories (e.g., pieces of information) that are useful for the child agent to process the sub-task, and share the one or more accessories with the child agent. The agent may determine whether an accessory can be shared with the child agent based on permission of users or the system. An accessory, once shared by the agent to the child agent, may provide useful information to the child agent in processing a task or a sub-task more efficiently without the need to discover, generate, or obtain the accessory by the child agent itself.

The system may further allow various types of handoffs depending on use cases or tasks submitted by users. For example, the system may allow blocking handoffs, where an agent may handoff a task to a child agent, pauses until receiving a result from the child agent, and then proceeds after receiving the result. As another example, the system may allow parallel handoffs, where an agent may handoff tasks in parallel to multiple child agents, and, without waiting for results from the child agents, continues to process other tasks or sub-tasks that the agent is processing without handing off. Advantageously, various handoffs schemes enable the system to more flexibly and efficiently utilize agents to process tasks based on characteristics of the tasks. In various implementations, the system may limit number of handoffs associated with task(s) or sub-task(s). For example, for some types of tasks, the system may limit the handoffs of the task that may occur at most twice (e.g., an agent can handoff the task to two child agents) or other numbers. Advantageously, limiting number of handoffs on some or all types of tasks may increase security of the system and reduce likelihood of extensive looping of tasks that could occur if a set of tasks are attempting to incrementally optimize an output.

### Agent Accessory

Accessories are information that may be useful or necessary for agents to process tasks. Accessories may come in various forms and may include any types of electronic data, such as text, files, documents, books, manuals, emails, images, audio, video, databases, metadata, positional data (e.g., geo-coordinates), sensor data, web pages, time series data, and/or any combination of the foregoing and/or the like. An accessory may be permissioned and/or subject to various security constraints such that the accessory may be accessible to some agents but inaccessible to other agents. Accessories may be generated or created by agents during processing tasks, but may also be provided by users based on demands of users. For example, when an agent is tasked to perform statistical analysis on production data of a production facility to provide recommendation on how to increase production volume, the user may provide a spreadsheet or other data files that include production data as an accessory for the agent to process the task. Alternatively and/or optionally, accessories may be generated, discovered, synthesized, or created by agents while processing certain tasks. For example, while processing a task that needs to take into account particular information, an agent searched through on-line databases to identify a document containing the particular information and saved the particular information along with a document ID of the document as an accessory. Additionally and/or optionally, accessories may be created by agents using tools while processing tasks. For example, an accessory may be a result generated by an agent while processing a task, where the result may be utilized by the agent or other agents for processing other tasks.

To use accessories for processing tasks, agents may store accessories in memory (e.g., agent storages). To access accessories, agents may utilize pointers that point to locations in the memory where desired accessories are stored. In various implementations, accessories may be stored as data objects that are defined in one or more ontologies. An accessory can be multi-modal (e.g., including both textual and video information). An accessory can also come in different forms and types. For example, an accessory may include strings, double integers, integers, images, data frames, sound files, or the like. An agent may share accessories with other agents if sharing is permitted under the permissioning of the system. For example, the agent may grant other agents access to an accessory that is stored in a storage associated with the agent and provide a pointer to the accessory to other agents. Advantageously, when utilized by an agent, accessories may enrich knowledge base of the agent or increase potency of the agent.

In various implementations, the system can track a lineage of an accessory to track a basis for a generated accessory and/or whether the accessory is further utilized to generate other information. For example, the system can record a lineage of an accessory, where the lineage shows what tool(s) are utilized to generate the accessory. The lineage of the accessory may include metadata that can enable users or the system to efficiently track from where the accessory comes into being and where the accessory is used, such as which agents or tasks use the accessory (which may be one or more versions of an accessory).

In various implementations, lineages of accessories may be presented to users through interactive graphical representations that include nodes (e.g., representing accessories) and/or edges (e.g., representing connections between accessories) of graphical user interfaces (GUIs). Advantageously, the lineage of an accessory enables the system to more efficiently verify or evaluate the usefulness of the accessory. Once an accessory is stored in an agent storage, the system may further evaluate correctness or accuracy of information contained in the accessory. For example, if an agent or the system determines that the accessory contains accurate information, the agent or the system may keep the accessory in an agent storage. But if the agent or the system determines that the accessory contains inaccurate information, the agent or the system may update the accessory and/or delete the accessory from the agent storage.

Additionally and/or optionally, the system may impose a time-to-live constraint on an accessory based on characteristics of the accessory. For example, an accessory that is solely useful for processing a specific task by a specific agent may have a shorter time-to-live, and may be deleted once the specific task has been processed. As another example, an accessory that may be useful for an agent to process various tasks or for other agents may have a longer time-to-live, and may persist after the agent completes tasks using the accessory. As still another example, an accessory that is provided by a user may persist throughout or beyond an individual run, where the individual run is a full interaction of the user with the system. Advantageously, imposing time-to-live constraints on accessories may allow the system to more efficiently utilize storage resources by freeing up storage capacity that otherwise would be occupied by accessories that are no longer useful to users or the system.

### Agent Coordinator

In various implementations, the system may utilize an agent coordinator to supervise handoffs of tasks or sub-tasks among agents to ensure handoffs are robustly performed and do not interfere with processing of other tasks or sub-tasks. For example, if an agent seeks to handoff a first task to a child agent which is processing a second task and the first task requires the child agent switches from a current configuration to a different configuration, the agent coordinator may determine the handoff may adversely impact performance of the child agent and intervene to redirect the handoff to another child agent that has immediate capacity (e.g., already configured to the different configuration) to process the first task. Additionally and/or optionally, the agent coordinator may mange handoffs among agents based on input(s) from user(s). For example, upon receiving an input from a user indicating that a task is to be terminated, the agent coordinator may instruct agents that are processing the task to pause and may block handoffs of sub-tasks of the task. Advantageously, more computing resources may be released to process tasks based on user needs.

In various implementations, an agent coordinator may facilitate communications among agents, and communications between agents and users or the system. In some examples, the agent coordinator may manage and monitor operations performed by agents. For example, the agent coordinator may pause an agent if the agent coordinator determines that the agent is committing more errors while processing a task. As another example, the agent coordinator may restart an agent in response to receiving input(s) from a user. As yet another example, the agent coordinator may prevent unexpected input from feeding into an agent if the agent coordinator determines that the unexpected input may mislead the agent to improperly process a task.

Additionally, the agent coordinator may allow bidirectional communications between agents and users or the system. In various implementations, an agent may request additional information from a user or the system after the agent starts processing a request from the user. For example, the agent may request more user inputs from the user, such as a prompt or an accessory, through the agent coordinator. As another example, the agent may request the user to perform one or more actions on the system or other systems external to the system, such as requesting the user to enter entries in a system applications and products (SAP) ordering system before the agent can further proceed with a current task. Advantageously, the bidirectional communications facilitated by the agent coordinator allows users to more efficiently work with agents to meet demands of users.

### Agent Storage

An agent storage may be utilized by an agent to store data and/or information (e.g., accessories, tools, messages, program code, data files, tables, or the like) for processing tasks. For each agent, the system may allocate an agent storage, where an agent may store data and/or information used by the agent to process tasks. For example, an agent may store accessories that are generated by the agent in an agent storage associated with the agent, and share pointers that pointed to the stored accessories to other agents such that other agents can access the stored accessories. As another example, the agent may generate or create new tools (e.g., a statistical analysis tool) for processing certain tasks to the agent storage. As yet another example, the agent may be tasked to write a program code (e.g., Python code). The agent may then utilize a tool to find an application programming interface (API) endpoint for generating the program code, and store the program code in the agent storage. In various implementations, an agent may have full access to an agent storage allocated to the agent but may have limited access to agent storages of other agents. Based on permissioning of the system, an agent or the system may grant another agent access to parts or all of the agent storage of the agent. For example, an agent may share accessories to a child agent to which the agent handoffs a task or a sub-task.

To efficiently utilize an agent storage, an agent may have one or more retention policies that allow the agent to remove outdated data and/or information from the agent storage. For example, the agent may have a message retention policy based on which the agent may determine some messages are outdated or no longer useful, and can be removed from the agent storage. The message retention policy or any other data retention policies of the agent may be configurable. For example, the agent may configure its message retention policy to one of keep_initial_and_last_n, remove_by_drop, remove_and_add_summary, and the like.

Additionally, an agent may designate some of data and/or information stored in an agent storage to appropriate retention durations based on various criterion. In various implementations, the agent may determine that information contained in an accessory is true for a limited amount of time and assign a shorter time-to-live on the accessory stored in the agent storage. For example, the agent may determine that information contained in the accessory no longer holds true after a currently processed task is completed. Once completing the task, the agent may remove the accessory from the agent storage to release spaces of the agent storage. Removing outdated accessories, messages, and/or other data stored in the agent storages enables agents to more efficiently utilized available and constrained storage resources to preserve capacity for storing useful data and/or information in agent storages.

### Example User Interface Features

The system may further allow users to interact with the system through one or more user interfaces (e.g., a graphical user interface ("GUI") or other types of user interfaces) to allow users to configure agents, interact with agents, and verify results generated by agents. In various implementations, users may configure an ontology, a LLM, tools, accessories, an agent storage, or other aspects of an agent through operating on a user interface. For examples, a user may configure which tools (e.g., a calculator or other tools) the agent can utilize to process tasks. The user may also configure types of child-agents to which the agent may handoff tasks or sub-tasks, and maximum number of handoffs (e.g., a handoff depth) that can be utilized by the agent. Additionally and/or optionally, the user may configure types of LLMs and/or machine learning (ML) models accessible to the agent through the user interface. The user interface may further allow users to view and track various configurations (e.g., through version control mechanisms noted above) that are available to configure an agent or child-agents of the agent. Advantageously, a user may preserve a specific configuration of an agent that is tested to be effective for solving a specific type of problems while experimenting new configurations based on minor or minimal adjustments to the specific configuration without losing the efficacy of the specific configuration.

In various implementations, a user may evaluate or verify results generated by agents through manipulating a user interface provided by the system. In some examples, the user interface may present information related to an individual run. For example, the information related to the individual run may include the initial prompt and subsequent prompts received by the agent from the user, starting and end timestamps of the individual run, status (e.g., completed, succeeded, failed, or the like) of the individual run, timelines of occurrence of events while the agent executing the individual run, intermediate results generated by the agent, child-agents to which the agent handoffs tasks, number of errors committed by the agent when utilizing some tools, or the like. Advantageously, the system may allow users to more efficiently evaluate or verify performances of agents through, for example, reviewing steps or actions taken by an agent to process a task.

Additionally, user interfaces of the system may present information related to accessories utilized by agents to process tasks. In various implementations, a user interface of the system may visualize relationships between accessories utilized by one or more agents for solving some problems. For example, the user interface may present an interactive graphical representation of accessories used by an agent. More specifically, the interactive graphical representation may represent accessories as nodes and relationships of accessories as edges. For example, the interactive graphical representation may visualize a first accessory utilized by an agent to process a task as a first node, visualize a second accessory utilized by the agent to process the task as a second node, and show that the first node is connected to the second node through an edge, where the edge indicates that the second accessory is generated based on the first accessory. Advantageously, the graphical representation of accessories enables users to efficiently review and track what accessories are utilized by agents to process tasks and how an accessory is related to another. Additionally and/or optionally, the system may allow a user to create one or more accessories by operating on user interface(s) provided by the system, where the created accessories may be passed to agents by the system for processing tasks submitted by the user.

### Example Large Language Model Functionality

The system and/or agents of the system may employ one or more LLMs to provide various services. In various implementations, agents may receive user requests to process various types of tasks, such as automatically generating texts to summarize a set of documents, conducting analysis based on data contained in articles, tables, spreadsheets, or the like, scheduling distribution of materials based on supply chain constraints and requirements from demand sides, or the like. For example, agents may allow users to query internal or third-party data using a LLM (e.g., a QA (question and answer) LLM) that is trained to generate answers from user queries. In various implementations, the LLMs utilized by the system and/or the agents may be locally hosted, cloud managed, accessed via one or more Application Programming Interfaces ("APIs"), and/or any combination of the foregoing and/or the like. Data that may be processed by agents through using the LLMs may include any type of electronic data, such as text, files, documents, books, manuals, emails, images, audio, video, databases, metadata, positional data (e.g., geo-coordinates), sensor data, web pages, time series data, and/or any combination of the foregoing and/or the like.

As noted above, the system may provide the flexibility of easily swapping between various language models employed by agents to provide various services through configuring agents. For example, the system may swap a LLM (e.g., switching between GPT-2 to GPT-3) for analyzing information to provide recommendations (e.g., to which distribution centers shipment orders should be placed) based on analyses. Such model swapping flexibility provided by the system may be beneficial in various aspects, such as experimentation and adaptation to different models based on specific use cases or requirements, providing versatility and scalability associated with services rendered by the system.

In other embodiments, the system and/or agents of the system can incorporate and/or communicate with one or more LLMs to perform various functions, such as executing similarity searches to search for data. The communication between the system and the one or more LLMs may include, for example, a context associated with an aspect or analysis being performed by the system, a user-generated prompt, an engineered prompt, prompt and response examples, example or actual data, and/or the like. For example, the system and/or agents may employ an LLM, via providing an input to, and receiving an output from, the LLM. The output from the LLM may be parsed and/or a format of the output may be updated to be usable for various aspects of the system.

### Example Features Related to Data Objects

The system may employ database(s) that uses ontology and data objects to store, represent and/or organize data utilized by the system. The system may capture and synchronize data or information associated with a run (e.g., a full interaction of a user with the system) into an ontology associated with a database. As such, data utilized by the system may be organized and linked to relevant context for providing a comprehensive knowledge base for evaluation, verification, and analysis.

In some embodiments, a body of data may be conceptually structured according to an object-centric data model represented by the ontology. The ontology may include stored information providing a data model for storage of data in the database. The ontology may be defined by one or more object types, which may each be associated with one or more property types. At the highest level of abstraction, data object may be a container for information representing things in the world. For example, data object can represent a document or other data source such as an e-mail message, a news report, or a written paper or article. Additionally, data object can represent an entity such as a person, a place, an organization, a market instrument, or other noun. Data object can further represent an event that happens at a point in time or for a duration. Each data object may be associated with a unique identifier that uniquely identifies the data object within the database of the system.

In various implementations, the system may utilize an "interaction data object" to store information and/or data associated with a run of a user in a database of the system for various purposes. The interaction data object may include data objects or may be linked to data object(s) that represent documents, data sources, timestamps of events (e.g., when one or more user queries of the user are received and/or responded), profiles of the user, or the like that are associated with a user interaction. For example, initial and subsequent prompts from the user and/or steps taken by agents utilized to fulfill objectives of the user can be stored by the system using the interaction data object and/or data objects associated with the interaction data object for later evaluation. The system may utilize the interaction data object and/or additional data objects to automatically generate evaluation reports for various purposes, such as evaluating the performances of agents. Advantageously, interaction data objects stored in the database of the system may enable information associated with the user interaction to be easily reviewable. The system may further utilize information stored using the interaction data object and/or other data objects to evaluate if agents are not processing tasks efficiently.

### Example System and Related Computing Environment

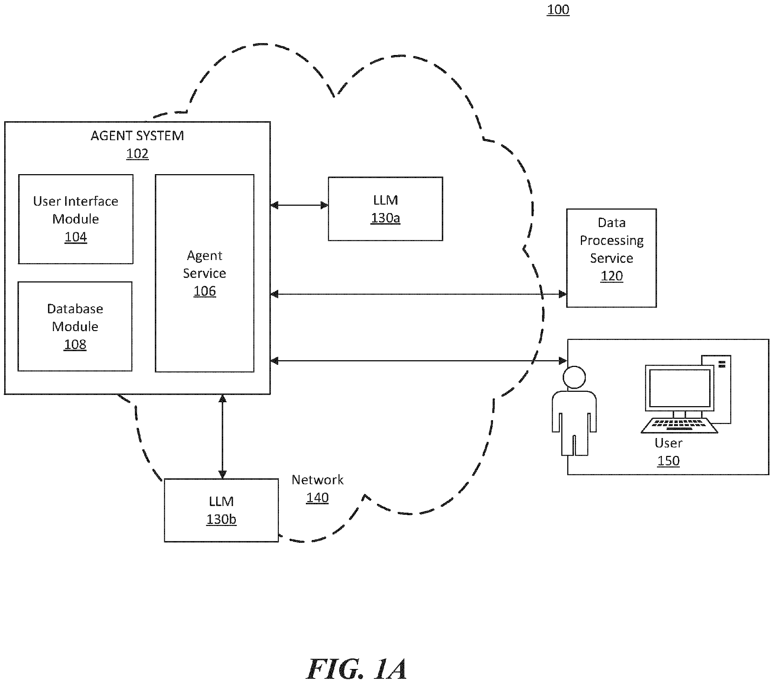

FIG. 1A illustrates an example computing environment 100 including an example agent system 102 in communication with various devices to respond to user inputs. The example computing environment 100 includes an agent system 102, a LLM 130a, a LLM 130b, a network 140, a data processing service 120, and a user 150. In the example of FIG. 1A, the agent system 102 comprises various modules, including a user interface module 104, a database module 108, and an agent service 106. In other embodiments, the agent system 102 may include fewer or additional components.

In the example of FIG. 1A, the various devices are in communication via a network 140, which may include any combination of networks, such as one or more personal area network, local area network, wide area network, over-the-air broadcast network (e.g., for radio or television), cable network, satellite network, cellular telephone network, or combination thereof. As a further example, the network 140 may be a publicly accessible network of linked networks, possibly operated by various distinct parties, such as the Internet. In some embodiments, the network 140 may be a private or semi-private network, such as a corporate or university intranet. The network 140 may include one or more wireless networks, such as a Global System for Mobile Communications (GSM) network, a Code Division Multiple Access (CDMA) network, a Long Term Evolution (LTE) network, or any other type of wireless network. The network 140 can use protocols and components for communicating via the Internet or any of the other aforementioned types of networks. For example, the protocols used by the network 140 may include Hypertext Transfer Protocol (HTTP), HTTP Secure (HTTPS), Message Queue Telemetry Transport (MQTT), Constrained Application Protocol (CoAP), and the like. In some embodiments, modules of the illustrated components, such as the user interface module 104, the database module 108, and the agent service 106, may communicate via an internal bus and/or via the network 140.

The user interface module 104 is configured to generate user interface data that may be rendered on a user 150, such as to receive an initial user input, as well as later user input that may be used to initiate further data processing. In some embodiments, the functionality discussed with reference to the user interface module 104, and/or any other user interface functionality discussed herein, may be performed by a device or service outside of the agent system 102 and/or the user interface module 104 may be outside the agent system 102. Example user interfaces are described in greater detail below.

The database module 108 may be any types of data stores and can store any data, data objects of data object types, or the like. The database module 108 is configured to store data/information that may be utilized by the agent system 102 and/or accessed or manipulated by the user 150, as described herein. Data that may be stored in the database module 108 may include any type of electronic data, such as text, files, documents, books, manuals, emails, images, audio, video, databases, metadata, positional data (e.g., geo-coordinates), sensor data, web pages, time series data, and/or any combination of the foregoing and/or the like.

In the example of FIG. 1A, the user 150 (which generally refers to a computing device of any type that may be operated by a human user) may provide a user input to the agent system 102 indicating a natural language request for some data analysis to be performed or computational tasks and/or problems to be solved by the agent system 102. For example, the user input along with other supplemental information or instructions, if any, may be provided through the user interface module 104 to the agent service 106. In some embodiments, the user 150 may provide supplemental information (e.g., specifying some constraints on processing results to be generated by the agent service 106, selecting one or more object types to limit processing by the agent system 102 to only those selected object types, or the like) to increase speed and relevance of results provided by the agent service 106 and/or agent system 102, while in other embodiments the user 150 may not provide any information except an initial input.

As noted above, the agent system 102 (e.g., the agent service 106) may include and/or have access to one or more large language model (LLM) or other language model, and the LLM may be fine-tuned or trained on appropriate training data (e.g., annotated data showing correct or incorrect pairings of sample natural language queries and responses). After receiving a user input, the agent system 102 may generate and provide, through the agent service 106, one or more prompts to a LLM 130a, which may include one or more large language models trained to fulfill a modeling objective, such as task completion, text generation, summarization, or the like.

The LLM 130a and various modules of the agent system 102, such as the agent service 106, may also communicate with one or more data processing services 120 in the course of fulfilling a user input. The data processing services 120 may include any quantity of services (or "plug-ins") and any available type of service. For example, the data processing services 120 may include one or more search services (e.g., a table search service, an object search service, a text search service, or any other appropriate search service), indexing services, services for formatting text or visual graphics, services for generating, creating, embedding and/or managing interactive objects in a graphical user interface, services for caching data, services for writing to databases, an ontology traversing service (e.g., for traversing an ontology or performing search-arounds in the ontology to surface linked objects or other data items) or any other services. For example, the agent service 106 may request for data processing services 120 to perform a specific process. In some implementations, the data processing services 120 may be a part of the agent system 102 (e.g., as part of a data processing services module of the agent system 102).

In various implementations, the agent service 106 may receive user requests to process various types of tasks, such as image and/or audio processing tasks, machine controlling tasks, tasks involving automatically generating texts to summarize a set of documents, conducting analysis based on data contained in articles, tables, spreadsheets, or the like, scheduling distribution of materials based on supply chain constraints and requirements from demand sides, or the like. For example, the agent service 106 may allow users to query internal or third-party data using the LLM 130a (e.g., a QA (question and answer) LLM) that is trained to generate answers from user queries. In various implementations, the LLM 130a utilized by the agent service 106 may be locally hosted, cloud managed, accessed via one or more Application Programming Interfaces ("APIs"), and/or any combination of the foregoing and/or the like. Data that may be processed by the agent service 106 through using the LLM 130a may include any type of electronic data, such as text, files, documents, books, manuals, emails, images, audio, video, databases, metadata, positional data (e.g., geo-coordinates), sensor data, web pages, time series data, and/or any combination of the foregoing and/or the like.

As shown, the agent system 102 (e.g., the agent service 106) may be capable of interfacing with multiple LLMs. This allows for experimentation and adaptation to different models based on specific use cases or requirements, providing versatility and scalability to the system. In some implementations, the agent system 102 may interface with a second LLM 130b in order to, for example, solve a problem for the user 150, generate an input to a data processing service 120, or to generate some or all of a natural language prompt (e.g., generate a prompt for the first LLM 130a).

In the example of FIG. 1A, the agent service 106 may include a plurality of agents that may be utilized by the agent system 102 to solve various problems or process various tasks received from the user 150. As noted above, agents in the agent service 106 may coordinate with each other to solve problems or process tasks, thereby increasing the efficiency and accuracy of the agent system 102 in processing user inputs from the user 150. Agents employed by the agent service 106 may be configurable based on various settings or parameters. Additionally, configurations of agents can be version controlled by the agent service 106. The agent service 106 may generate and maintain a log to record events, timelines, received inputs, or generated outputs while agents process tasks or solve problems received from the user 150. In various implementations, agents employed by the agent service 106 may coordinate with other agents by handing off tasks to agents (e.g., child-agents) which are suitable or specialized in handling the tasks. If an agent determines to handoff a sub-task to a child agent, the agent may choose to share knowledge with the child agent. For example, the agent may share an accessory with the child agent, where the accessory may be useful in processing the sub-task. The agent service 106 may provide storage (e.g., agent storage) for agents to store accessories and/or other information useful for processing tasks or problems. The agent service 106 may further utilize an agent coordinator to supervise handoffs of tasks or sub-tasks among agents to ensure handoffs are robustly performed and do not interfere with processing of other tasks or sub-tasks. In various implementations, the agent coordinator of the agent service 106 may facilitate communications among agents, and communications between agents and users or the system.

Advantageously, the agent service 106 enables agents to coordinate (e.g., handoff a task from one agent to another) with each other to effectively solve problems received from the user 150 in both time and resource efficient manners. Additionally, the agent service 106 allows agents to share information useful for processing tasks or solving problems effectively and reliably while respecting security and/or permissioning defined by the agent system 102 and/or the user 150. Further, through the assistance of the user interface module 104, the agent service 106 may allow the user 150 to track or monitor problem solving processes went through by agents employed by the agent service 106 to evaluate the soundness of steps taken or decisions made by agents. The agent service 106 may further allow the user 150 to configure agents based on various user objectives to enhance scalability and reusability of the agent system 102.

### Example System and Related Modules

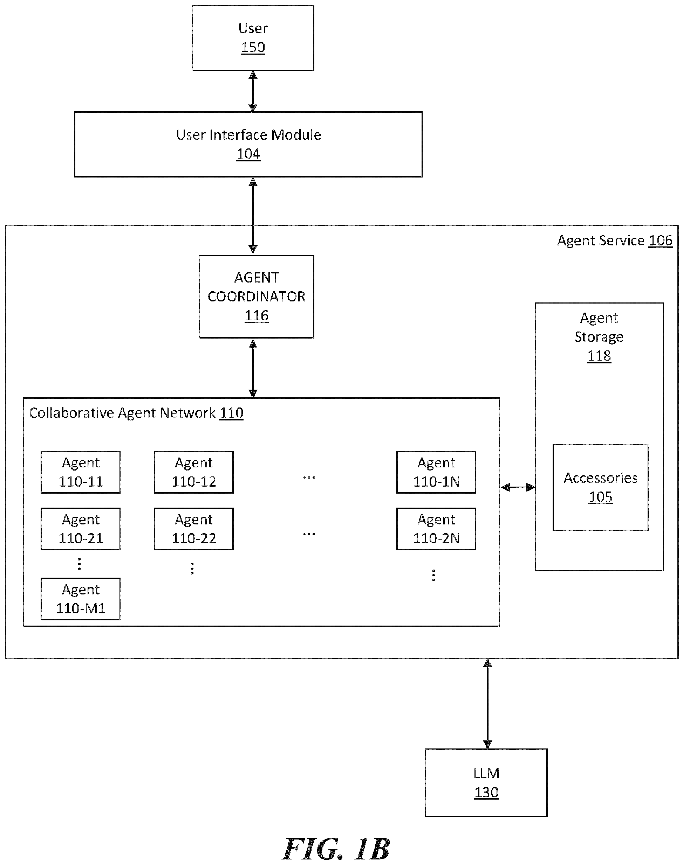

FIG. 1B depicts example connections between various modules associated with the agent system 102 of FIG. 1A, including the user interface module 104, the agent service 106 that includes one or more agent coordinator 116, one or more agent storage 118, and a collaborative agent network 110, and the LLM 130. In other embodiments, the agent system 102 and/or the agent service 106 may include fewer or additional connections. The indicated connections and/or data flows of FIG. 1B are exemplary of only certain processes performed by the agent system 102 and is not meant to include all possible blocks and participants.

As described above, the user interface module 104 is configured to generate user interface data that may be rendered on the user 150 (which generally refers to a computing device of any type and/or a human user of the device), such as to receive an initial user input, as well as later user input that may be used to initiate further data processing. In some embodiments, the functionality discussed with reference to the user interface module 104, and/or any other user interface functionality discussed herein, may be performed by a device or service outside of the agent system 102 and/or the user interface module 104 may be outside the agent system 102. A user 150 may provide a user input to the user interface module 104 indicating a natural language request for some data analysis to be performed and/or tasks or problems to be solved by the agent system 102.

The user input along with other supplemental information or instructions, if any, may be provided through the user interface module 104 to the agent service 106. In some embodiments, the user 150 may provide supplemental information (e.g., specifying some constraints on processing results to be generated by the agent service 106, selecting one or more object types to limit processing by the agent system 102 to only those selected object types, or the like) to increase speed and relevance of results provided by the agent service 106 and/or agent system 102, while in other embodiments the user 150 may not provide any information except an initial input.

In the example of FIG. 1B, the agent service 106 includes the agent coordinator 116, the agent storage 118 and the collaborative agent network 110. The collaborative agent network 110 includes the agent 110-11, the agent 110-21 through the agent 110-M1, where the agent 110-21 through the agent 110-M1 (M being any positive integer) are child-agents of the agent 110-11; the agent 110-12 and the agent 110-22, where the agent 110-22 is the child-agent of the agent 110-12; and the agent 110-1N (N being any positive integer) and the agent 1 10-2N, where the agent 1 10-2N is the child-agent of the agent 110-1N. Each of the agents 110-11, 110-21, 110-M1, 110-12, 110-22, 110-1N, or 110-2N may be configurable based on various settings. For example, the agent 110-11 can be configured or reconfigured to be associated with various ontologies, large language models (LLMs), tools, accessories, storages, or the like. The agent service 106 may flexibly (e.g., based on user demands) reconfigure each of the agents 110-11, 110-21, 110-M1, 110-12, 110-22, 110-1N, or 110-2N from one configuration to another configuration. Advantageously, reconfigurable agents enable the agent service 106 to swap or switch agent configurations for achieving various objectives. For example, the agent service 106 may feed the same input(s) to the agents 110-11 and 110-21 that are configured the same except LLMs utilized by the agents 110-11 and 110-21 to evaluate or benchmark performances of the LLMs. As another example, when the agent 110-1N is tasked to solve a problem related to a new subject matter, the agent service 106 and/or users may reconfigure the agent 110-1N to utilize an ontology that is created or updated based on the new subject matter.

In various implementations, the agents 110-11, 110-21, 110-M1, 110-12, 110-22, 110-1N, or 110-2N in the collaborative agent network 110 may coordinate with each other to process tasks collaboratively. For example, the agent 110-12 may coordinate with the agent 110-22 by handing off tasks to the agent 110-22, where the agent 110-22 is suitable or specialized in handling the tasks. More specifically, when the agent 110-12 determines that a task which the agent 110-22 is processing requires specialized capability, the agent 110-12 may handoff some or all of the task to the agent 110-22 that has been trained or tested to efficiently solve the task. In various implementations, agents 110-11, 110-12, 110-1N may handoff some (e.g., sub-tasks) or all of a task to one or more child agents which may be specialized in processing specific types of tasks or sub-tasks. Additionally, the parent-child agent relationship can be configurable by the agent service 106. For example, the agent 110-11 can be configured to have the agent 110-21 as a child agent, where the child agent (i.e., the agent 110-21) may be explicitly specified in a configuration of the agent 110-11. A configuration of the agent 110-21 may also explicitly specify the agent 110-11 as a parent agent. As such, the parent-child agent relationship(s) can be bi-directional. Advantageously, handing off tasks from agents 110-11, 110-12 and 110-1N to corresponding child agents 110-21, 110-M1, 110-22, 110-2N provide multiple improvements over utilizing a single and large agent to process tasks. For example, handing off sub-tasks to child agents that have been proven to process the sub-tasks efficiently enables the agent service 106 to effectively process requests from the user 150 to return accurate and reliable results. Handing off tasks may further reduce the update or maintenance cost of agents employed by the agent service 106 because updates on or migration of agents can be targeted and tailored toward subsets of agents of the system.

The agent service 106 may further utilize the agent storage 118 to store information useful for the collaborative agent network 110 to process tasks or solve problems received from the user 150. In various implementations, the agent storage 118 may store accessories 105 that may be useful or necessary for agents to process tasks. Accessories 105 may come in various forms and may include any types of electronic data, such as text, files, documents, books, manuals, emails, images, audio, video, databases, metadata, positional data (e.g., geo-coordinates), sensor data, web pages, time series data, and/or any combination of the foregoing and/or the like. Accessories 105 may be permissioned and/or subject to various security constraints such that the accessory may be accessible to some agents but inaccessible to other agents. Accessories 105 may be generated or created by agents in the collaborative agent network 110 during processing tasks, but may also be provided by users based on demands of users. For example, when the agent 110-11 is tasked to perform image or audio processing on image or audio data of the user 150 to perform an image or audio processing task, such as denoising or filtering, the user 150 may provide data indicative of filter parameters as a part of the accessories 105 for the agent 110-11 to process the task. For example, when the agent 110-11 is tasked to perform statistical analysis on sales data of the user 150 to provide recommendations on how to increase sales volume, the user 150 may provide a spreadsheet or other data files that include sales data as part of the accessories 105 for the agent 110-11 to process the task. Alternatively and/or optionally, accessories 105 may be generated, discovered, synthesized, or created by agents while processing certain tasks. For example, while processing a task that needs to take into account particular information, the agent 110-12 searched through on-line databases to identify a document containing the particular information and saved the particular information along with a document ID of the document in the agent storage 118 as a part of the accessories 105. Additionally and/or optionally, accessories 105 may be created by agents in the collaborative agent network 110 using tools while processing tasks. For example, a part of the accessories 105 may be a result generated by the agent 110-1N while processing a task, where the result may be utilized by the agent 110-1N or 110-2N for processing other tasks.

In various implementations, the agent storage 118 may impose a time-to-live constraint on the accessories 105 based on characteristics of the accessories 105. For example, an accessory that is solely useful for processing a specific task by a specific agent (e.g., the agent 110-11) may have a shorter time-to-live, and may be deleted once the specific task has been processed. As another example, an accessory that may be useful for the agent 110-12 to process various tasks and also useful for another agent 110-1N may have a longer time-to-live, and may persist after the agent 110-12 completes tasks using the accessory. Advantageously, imposing time-to-live constraints on accessories 105 may allow the agent storage 118 to more efficiently utilize storage resources by freeing up storage capacity that otherwise would be occupied by accessories 105 that are no longer useful to the user 150 or the agent system 102.

In addition to storing accessories 105, agents in the collaborative agent network 110 may also store tools for processing certain tasks or generated results to the agent storage 118. For example, the agent 110-12 may be tasked to write a program code (e.g., Python code). The agent 110-12 may then utilize a tool stored in the agent storage 118 to find an application programming interface (API) endpoint for generating the program code, and store the program code in the agent storage 118. In various implementations, the agent storage 118 may be partitioned and allocated to agents in the collaborative agent network 110. For example, the agent 110-21 may have full access to a portion of the agent storage 118 allocated to the agent 110-21 but may have limited or no access to portions of the agent storage 118 allocated to other agents in the collaborative agent network 110. Based on permissioning of the agent system 102, an agent or the agent system 102 may grant another agent access to parts or all of the agent storage 118 allocated to the agent. For example, the agent 110-11 may share accessories 105 to a child agent (e.g., the agent 110-21) to which the agent 110-11 handoffs a task or a sub-task.

In various implementations, the agent service 106 may utilize the agent coordinator 116 to supervise handoffs of tasks or sub-tasks among agents in the collaborative agent network 110 to ensure handoffs are robustly performed and do not interfere with processing of other tasks or sub-tasks. For example, if the agent 110-11 seeks to handoff a first task to the agent 110-21 that is processing a second task and the first task requires the agent 110-21 switches from a current configuration to a different configuration, the agent coordinator 116 may determine that the handoff may adversely impact performance of the agent 110-21 and intervene to redirect the handoff to the agent 1 10-M1 that has immediate capacity (e.g., already configured to the different configuration) to process the first task. Additionally and/or optionally, the agent coordinator 116 may mange handoffs among agents of the collaborative agent network 110 based on input(s) from the user 150. For example, upon receiving an input from the user 150 indicating that a task is to be terminated, the agent coordinator 116 may instruct agents (e.g., the agent 110-12 and the agent 110-22) that are processing the task to pause and may block handoffs of sub-tasks of the task. As such, more computing resources may be released to process tasks based on needs of the user 150.

In various implementations, the agent coordinator 116 may facilitate communications among agents in the collaborative agent network 110, and communications between agents in the collaborative agent network 110 and the user 150 or the agent system 102. In some examples, the agent coordinator 116 may manage and monitor operations performed by agents in the collaborative agent network 110. For example, the agent coordinator 116 may pause an agent (e.g., the agent 110-22) if the agent coordinator 116 determines that the agent is committing more errors while processing a task. As another example, the agent coordinator 116 may restart the agent 110-1N in response to receiving input(s) from the user 150. As yet another example, the agent coordinator 116 may prevent unexpected input from feeding into the agent 110-M1 if the agent coordinator determines that the unexpected input may mislead the agent 110-M1 to improperly process a task.

Additionally, the agent coordinator 116 may allow bidirectional communications between agents in the collaborative agent network 110 and the user 150 or the agent system 102. In various implementations, an agent (e.g., the agent 110-1N) in the collaborative agent network 110 may request additional information from the user 150 or the agent system 102 after the agent starts processing a request from the user 150. For example, the agent 110-1N may request more user inputs from the user 150, such as a prompt or an accessory, through the agent coordinator 116. As another example, the agent 110-11 may request the user 150 to perform one or more actions on the agent system 102 or other systems external to the agent system 102, such as requesting the user 150 to enter entries in a system applications and products (SAP) ordering system before the agent 110-11 can further proceed with a current task. Advantageously, the bidirectional communications facilitated by the agent coordinator 116 allows the user 150 to more efficiently work with agents in the collaborative agent network 110 to meet demands of the user 150.

In various implementations, the user interface module 104 allows the user 150 to configure agents, interact with agents, and verify results generated by agents in the collaborative agent network 110. The user 150 may configure an ontology, a LLM, tools, accessories 105, the agent storage 118, or other aspects of an agent through interacting with the user interface module 104. For examples, the user 150 may configure which tools (e.g., a calculator or other tools) the agent 110-11 can utilize to process tasks. The user 150 may also configure types of child-agents to which the agent 110-11 may handoff tasks or sub-tasks, and maximum number of handoffs that can be utilized by the agent 110-11. Additionally and/or optionally, the user interface may further allow the user 150 to view and track various configurations (e.g., through version control mechanisms noted above) that are available to configure an agent or child-agents of the agent. Advantageously, the user 150 may preserve a specific configuration of an agent that is tested to be effective for solving a specific type of problems while experimenting new configurations based on minor or minimal adjustments to the specific configuration without losing the efficacy of the specific configuration.

### Example Database and Data Models

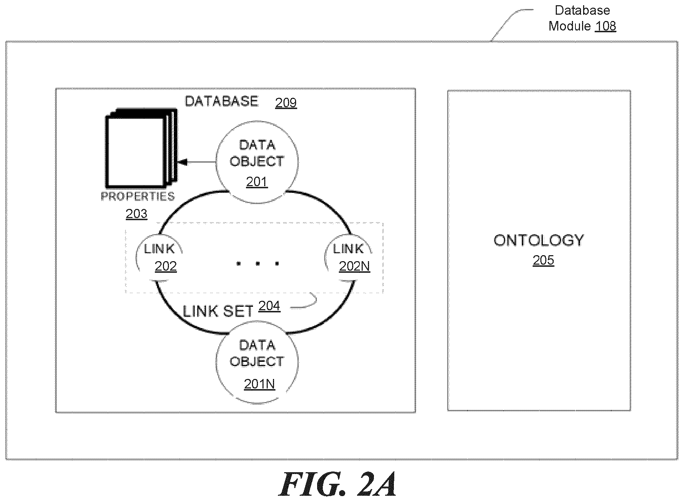

FIG. 2A illustrates an object-centric conceptual data model in the database module 108 of the agent system 102 according to various embodiments of the present disclosure. An ontology 205, as noted above, may include stored information providing a data model for storage of data in the database 209. The ontology 205 may be defined by one or more object types, which may each be associated with one or more properties 203 or property types. At the highest level of abstraction, data object 201 is a container for information representing things in the world. For example, interaction data object 210 that will be described with greater detail below can store information and/or data associated with a run of the user 150 in the database 209 of the agent system 102 for various purposes. Data object 201 or 201N can also represent a document or other unstructured data source such as an e-mail message, a news report, or a written paper or article. Data object 201 can also represent a query submitted by the user 150 or an answer provided by the agent system 102 to the user 150 in response to the query. Data object 201 can also represent an entity such as a person, a place, an organization, a market instrument, or other noun. Data object 201 can also represent an event that happens at a point in time or for a duration. Each data object 201 is associated with a unique identifier that uniquely identifies the data object within the database module 108.

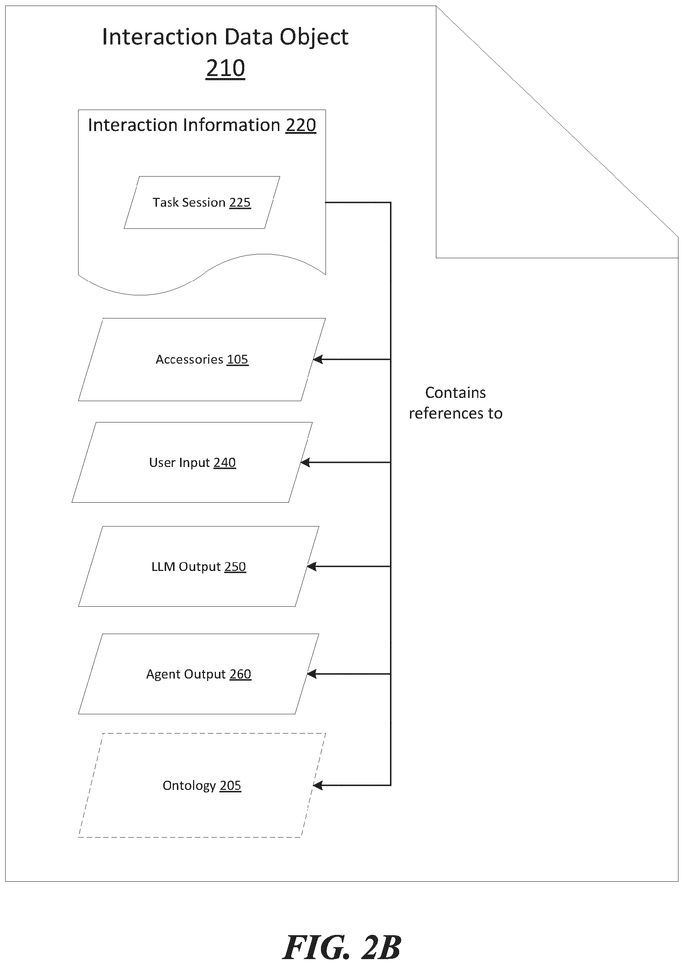

FIG. 2B is a block diagram illustrating an example interaction data object 210 in accordance with various implementations of the present disclosure. As indicated above, the interaction data object 210 may be stored in the database 209 of the database module 108. In various implementations, the agent system 102 may utilize the interaction data object 210 to store information and/or data associated with a run of a user in a database of the system for various purposes. The interaction data object 210 may include data objects or may be linked (e.g., using the link 202 and/or 202N) to data object(s) that represent documents, data sources, timestamps of events (e.g., when one or more user queries of the user are received and/or responded), profiles of the user, or the like that are associated with a user interaction with the user 150. For example, initial and subsequent prompts from the user 150 and/or steps taken by agents in the collaborative agent network 110 utilized to fulfill objectives of the user 150 can be stored by the agent system 102 using the interaction data object and/or data objects associated with the interaction data object for later evaluation. The agent system 102 may utilize the interaction data object and/or additional data objects to automatically generate evaluation reports for various purposes, such as evaluating the performances of agents in the collaborative agent network 110. Advantageously, interaction data objects 210 stored in the database 209 of the agent system 102 may enable information associated with the user interaction to be easily reviewable. The agent system 102 may further utilize information stored using the interaction data object 210 and/or other data objects to evaluate if agents in the collaborative agent network 110 are not processing tasks efficiently.

The interaction information 220 that includes associated task session 225 may include references to a portion of accessories 105, user input 240, LLM output 250, context 260 and/or ontology 205. For example, interaction information 220 may: (1) identify accessories 105 that are utilized by agents in the collaborative agent network 110 while processing tasks in a run of the user 150; (2) identify user input 240 that may be submitted by the user 150 in the run of the user 150; (3) identify LLM output 250 that may be generated by the LLM 130 in response to receiving a prompt from the collaborative agent network 110; and/or (4) identify ontology 205 that the LLM 130 may traverse in fulfilling a user input 240 from the user 150.

### Example Functionality and Operations of the System

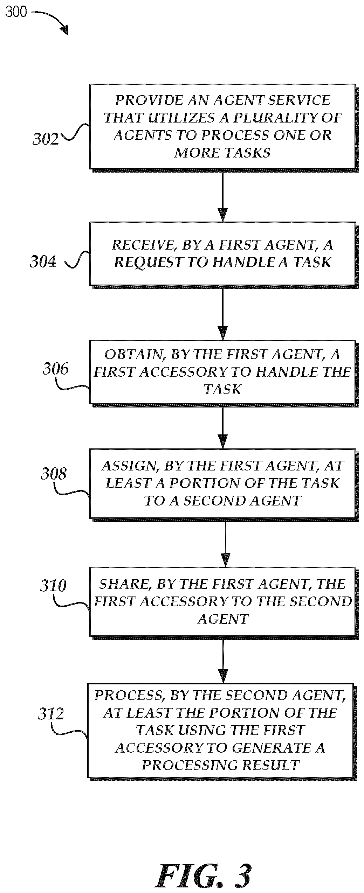

FIGS. 3, 4, and 5 show flowcharts illustrating example operations of the agent system 102 (and/or various other aspects of the example computing environment 100), according to various implementations. The blocks of the flowcharts illustrate example implementations, and in various other implementations various blocks may be rearranged, optional, and/or omitted, and/or additional block may be added. In various implementations, the example operations of the system illustrated in FIGS. 3, 4, and 5 may be implemented, for example, by the one or more aspects of the agent system 102 (e.g., the agent service 106), various other aspects of the example computing environment 100, and/or the like.

FIG. 3 depicts a flowchart illustrating an example method 300 according to various implementations. The method 300 may be implemented, for example, by the agent system 102 of FIGS. 1A and 1B to employ a plurality of agents (e.g., the agents 110-11 through 110-M1, the agent 110-12, the agent 110-22, the agent 110-1N, and the agent 110-2N) to automatically solve complex problems through coordination among the plurality of agents.

At block 302, the agent system 102 may provide an agent service that utilizes a plurality of agents to process one or more tasks. For example, the agent system 102 may provide the agent service 106 that includes the collaborative agent network 110, the agent coordinator 116, and the agent storage 118 to process tasks and/or requests from the user 150. As noted above, agents of the collaborative agent network 110 may coordinate with each other to process tasks or requests from the user. Agents of the collaborative agent network 110 may share information useful (e.g., the accessories 105) for processing tasks, user requests, or problems with each other according to security and/or permissioning defined by the agent system 102 or the user 150.

At block 304, the agent system 102 may receive a request to handle a task. For example, the agent 110-11 of the collaborative agent network 110 may receive a request from the user 150 to handle the task. The request may instruct the agent 110-11 to process various types of tasks, such as automatically generating texts to summarize a set of documents, conducting analysis based on data contained in articles, tables, spreadsheets, scheduling distribution of materials based on supply chain constraints and requirements from demand sides, or the like. In various implementations, the user 150 may submit the request to the agent 110-11 through interacting with the user interface module 104.

At block 306, a first agent of the agent system 102 may obtain a first accessory to handle the task. For example, the agent 110-11 of the collaborative agent network 110 may obtain the first accessory that is one of the accessories 105. As noted above, the first accessory may be information that are useful or necessary for the agent 110-11 to process tasks. The first accessory may come in various forms and may include any types of electronic data, such as text, files, documents, books, manuals, emails, images, audio, video, databases, metadata, positional data (e.g., geo-coordinates), sensor data, web pages, time series data, and/or any combination of the foregoing and/or the like. The first accessory may be permissioned and/or subject to various security constraints such that the first accessory may be accessible to some agents (e.g., the agents 110-21 through 110-M1) but inaccessible to other agents (e.g., the agents 110-12 and 110-22).

The first accessory may be generated by the agent 110-11 while handling the task, but may also be provided by the user 150 based on demands of the user 150. Alternatively, the first accessory may be generated, discovered, synthesized, or created by other agents (e.g., the agents the agents 110-21 through 110-M1, the agent 110-12, the agent 110-22, the agent 110-1N, and the agent 110-2N) while processing other tasks. Additionally and/or optionally, the first accessory may be created by the agent 110-11 using tools while processing the task or other tasks. In various implementations, the agent 110-11 may store the first accessory in the agent storage 118. To access the first accessory, the agent 110-11 may utilize a pointer that points to a location in the agent storage 118 that stores the first accessory.

While processing the task, at block 308, a first agent of the agent system 102 may assign (e.g., handoff) at least a portion of the task to a second agent of the agent system 102. For example, the agent 110-11 may assign at least a portion of the task to the agent 110-21 while processing the task. More specifically, if the agent 110-11 determines, for example based on a description, metadata and/or code associated with the task, which may be in agent settings, that the task requires specialized capability that the agent 110-11 has not been trained to acquire, for example based on a configuration of the agent 110-11, the agent 110-11 may handoff a portion of or all of the task to the agent 110-21 that has been trained or tested to efficiently solve the task, for example based on a configuration of the agent 110-21. In various implementations, some or all of the agents 110-21 through 110-M1 may be configured as one or more child agents of the agent 110-11 to which the agent 110-11 may handoff the task. The parent-child relationship between the agent 110-11 and one of the agents 110-21 through 110-M1 may be explicitly specified in a configuration of the agent 110-11, where a configuration of one of the agents 110-21 through 110-M1 may also explicitly specify the agent 110-11 as a parent agent. Advantageously, handing off the task by the agent 110-11 to child agent(s) (e.g., the agent 110-21) provide multiple improvements over utilizing a single and large agent to process tasks. For example, handing off sub-tasks to the agent 110-21 that has been proven to process the sub-tasks more efficiently than the agent 110-11 enables the agent system 102 to effectively process the request from the user 150 to return accurate and reliable results.

At block 310, after determining to assign at least the portion of the task to the second agent at block 308, the first agent may share the first accessory to the second agent. For example, the agent 110-11 may share the first accessory to the agent 110-21 after assigning at least the portion of the task to the agent 110-21. In various implementations, the first accessory may be stored in the agent storage 118 (e.g., as one of the accessories 105) as data objects of data object types that are defined in one or more ontologies. The agent 110-11 may share the first accessory with the agent 110-21 if sharing is permitted under the permissioning of the agent system 102, and grant the agent 110-21 access to the first accessory that is stored in the agent storage 118 by providing a pointer that points to the first accessory to the agent 110-21. Advantageously, when utilized by the agent 110-21, the first accessory may enrich knowledge base of the agent 110-21 or increase potency of the agent 110-21.

At block 312, the second agent may process at least the portion of the task using the first accessory to generate a processing result. For example, the agent 110-21 may process at least the portion of the task using the first accessory generate the processing result. The first accessory, once shared by the agent 110-11 to its child agent 110-21, may provide useful information to the child agent 110-21 in processing the task or a sub-task of the task more efficiently without the need to discover, generate, or obtain the first accessory by the child agent 110-21 itself. For example, when the agent 110-11 is tasked to perform image or audio processing on image or audio data of the user 150 to perform an image or audio processing task, such as denoising or filtering, the user 150 may provide data indicative of filter parameters as a part of the accessories 105 for the agent 110-11 to process the task. By sharing the first accessory (e.g., the filter parameters) to the agent 110-21, the agent 110-21 may be able to perform the processing requested by the user 150. As another example, the first accessory may a be generated, discovered, synthesized, or created by the agent 110-11 while processing the task. More specifically, while processing the task which needs to take into account particular information, the agent 110-11 searched through on-line databases to identify a document containing the particular information and saved the particular information along with a document ID of the document as the first accessory. By sharing the first accessory with the agent 110-21, the agent 110-21 may leverage the document to process the task without spending additional time to search the document.

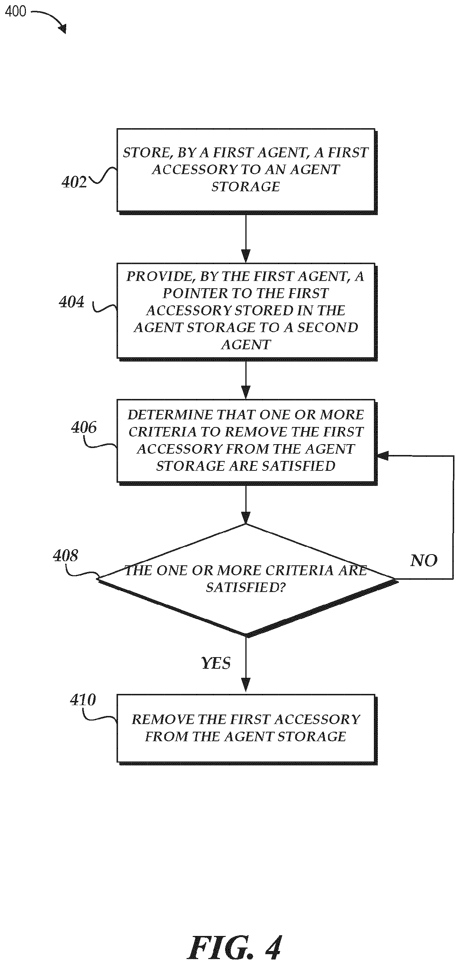

FIG. 4 is an example flowchart depicting an example method 400 for managing storage of an accessory in an agent storage for efficiently using storage resources of the agent system 102 according to various implementations. In various implementations, the method 400 may be performed in part or in full by the agent system 102 of FIGS. 1A and/or 1B, such as the agent storage 118. It should be noted that not all of the blocks of FIG. 4 have to be performed for managing storage of an accessory.

At block 402, a first agent of the collaborative agent network 110 may store a first accessory to the agent storage 118. For example, the agent 110-12 may store the first accessory as one of the accessories 105 stored in the agent storage 118. The agent storage 118 may be utilized by the agent 110-12 to store data and/or information (e.g., accessories, tools, messages, program code, data files, tables, or the like) for processing tasks. For each of the agents of the collaborative agent network 110, the agent service 106 may allocate a space in the agent storage 118 for the agent to store data and/or information used by the agent to process tasks. For example, the agent 110-12 may store the first accessory as one of the accessories 105 in the space of the agent storage 118 associated with the agent 110-12. As noted above, the first accessory may come in various forms and may include any types of electronic data, such as text, files, documents, books, manuals, emails, images, audio, video, databases, metadata, positional data (e.g., geo-coordinates), sensor data, web pages, time series data, and/or any combination of the foregoing and/or the like. For example, the first accessory may be a new tool (e.g., a statistical analysis tool) generated by the agent 110-12 or other agents of the collaborative agent network 110 for processing certain tasks. As another example, the first accessory may be program code generated by the agent 110-12 or other agents by utilizing a tool to find an application programming interface (API) endpoint that is used for generating the program code.

Optionally, at block 404, the first agent may provide a pointer to the first accessory stored in the agent storage 118 to a second agent. For example, the agent 110-12 may provide the pointer to the first accessory stored in the agent storage 118 to the agent 110-22. More specifically, based on permissioning of the agent system 102, the agent 110-12 may grant the agent 110-22 access to a space in the agent storage 118 allocated to the agent 110-12 such that the agent 110-22 may access the first accessory. In various implementations, the agent 110-22 may be permitted or granted access to the first accessory stored by the agent 110-12 because the agent 110-22 is configured as a child-agent of the agent 110-12. By providing the pointer to the first accessory stored in the agent storage 118 to the agent 110-22, the agent 110-22 may be permitted or granted access to the first accessory that may be useful for the agent 110-22 to process tasks or sub-tasks that are handoff from the agent 110-12.

At block 406, the agent system 102 may determine that one or more criteria to remove the first accessory from the agent storage 118 are satisfied. For example, the agent service 106 (e.g., the agent storage 118) may have one or more retention policies that allow the agent 110-12 to remove the first accessory, outdated data and/or other information from the agent storage 118. For example, the agent 110-12 may be associated with an information retention policy based on which the agent 110-12 may determine some the first accessory are outdated or no longer useful to any agents permissioned to access the first accessory, and can be removed from the agent storage 118. The information retention policy or any other data retention policies associated with the agent 110-12 may be configurable.

Additionally and/or optionally, the agent 110-12 may designate the first accessory, some of data and/or information stored in the space of the agent storage 118 allocated to the agent 110-12 to appropriate retention durations based on various criterion. In various implementations, the agent 110-12 may determine that information contained in the first accessory is true for a limited amount of time and assign a shorter time-to-live on the first accessory stored in the agent storage 118. For example, the agent 110-12 may determine that information contained in the first accessory no longer holds true after a currently processed task is completed. Once completing the task, the agent 110-12 may remove the first accessory from the agent storage 118 to free up some space in the agent storage 118. Advantageously, removing outdated accessories, messages, and/or other data stored in the agent storages enables the agent 110-12 to more efficiently utilized available and constrained storage resources to preserve capacity for storing useful data and/or information in the agent storage 118.

The method 400 then varies according to whether the agent system 102 determines that the one or more criteria are satisfied. In the instance that the one or more criteria are satisfied, block 408 evaluates as "Yes" and the method 400 proceeds to block 410, where the agent system 102 may remove the first accessory from the agent storage 118. For example, when the agent service 106 (e.g., the agent storage 118 or the agent 110-12) determines that information contained in the first accessory no longer holds true, the agent service 106 may remove the first accessory from the accessories 105 of the agent storage 118.

In the instance that the one or more criteria are not satisfied, then block 408 evaluates as "No" and the method 400 may return to block 406, where the agent system 102 may make another determination of whether the one or more criteria to remove the first accessory from the agent storage 118 are satisfied.

Although the method 400 illustrates storing and removing the first accessory from the agent storage by determining whether one or more criteria are satisfied, it should be noted that the method 400 can be applicable to remove other information and/or data from the agent storage 118. For example, the method 400 can be applicable to remove tool(s), message(s), and/or other data stored in the agent storage 118 so as to enable more efficient use of the agent storage 118.

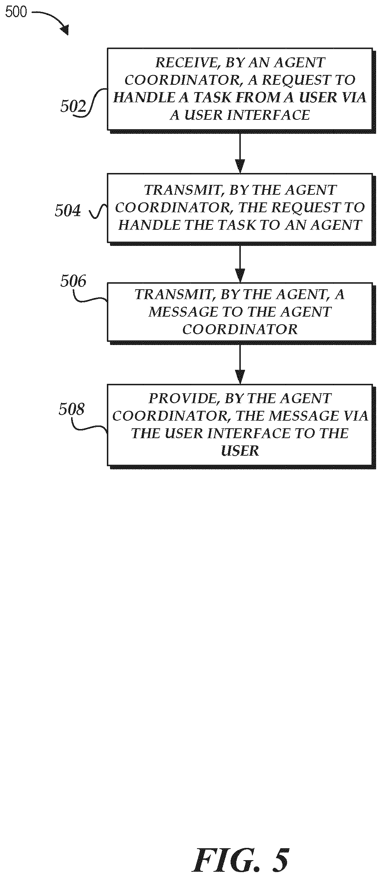

FIG. 5 is an example flowchart depicting an example method 500 for facilitating communications between an agent and a user according to various implementations. In various implementations, the method 500 may be performed in part or in full by the agent system 102 of FIGS. 1A and/or 1B, such as the agent coordinator 116 and the user interface module 104. It should be noted that the method 500 may be utilized by the agent system 102 to allow bidirectional communications between agents and users of the agent system 102 such that users (e.g., the user 150) may more efficiently work with agents in the collaborative agent network 110 to fulfill requests or demands of users.

At block 502, an agent coordinator may receive a request to handle a task from a user via a user interface. For example, the agent coordinator 116 may receive a request to handle a task from the user 150 via the user interface module 104. The request may be provided in a user input to the agent system, where the user input may specify the request and include some natural language instructions or indications of what the task is and/or how the request is to be fulfilled by the agent system 102. For example, the user 150 may provide supplemental information (e.g., specifying some constraints on processing results to be generated by the agent service 106, selecting one or more object types to limit processing by the agent system 102 to only those selected object types, or the like) to increase speed and relevance of results provided by the agent service 106 and/or agent system 102 to the user interface module 104. The user interface module 104 may then provide some or all of the user input received from the user 150 to the agent coordinator 116.

At block 504, the agent coordinator may transmit the request to handle the task to an agent. For example, the agent coordinator 116 may transmit the request to handle the task to one or more of the agents (e.g., the agent 110-1N) in the collaborative agent network 110. As such, agent(s) in the collaborative agent network 110 may initiate handling or processing the task. Additionally and/or optionally, the agent coordinator 116 may supervise handoffs, if any, of the task or sub-tasks of the task among agents to ensure handoffs are robustly performed and do not interfere with processing of other tasks or sub-tasks. For example, if the agent 110-1N seeks to handoff the task to the agent 1 10-2N (e.g., a child-agent of the agent 110-1N) which is processing other tasks and the task requires the agent 110-1N switches from a current configuration to a different configuration, the agent coordinator 116 may determine the handoff may adversely impact performance of the agent 110-1N and intervene to redirect the handoff to other agents in the collaborative agent network 110 that has immediate capacity (e.g., already configured to the different configuration) to process the task.

Additionally and/or optionally, the agent coordinator 116 may manage handoffs among agents of the collaborative agent network 110 based user input from the user 150. For example, upon receiving an input from the user 150 indicating that the task is to be terminated, the agent coordinator 116 may instruct agent(s) (e.g., the agent 110-1N and the agent 110-1N) that are processing the task to pause and may block handoffs of sub-tasks of the task. Advantageously, more computing resources may be released to process tasks based on user needs through the intervention of the agent coordinator 116.

At block 506, while processing the task, the agent may transmit a message to the agent coordinator. In various implementations, the agent 110-1N may transmit a message to the agent coordinator 116 for requesting additional information from the user 150 and/or the system after the agent 110-1N starts processing the task requested by the user 150. For example, the agent 110-1N may request more user inputs from the user 150, such as a prompt or an accessory, through sending the message to the agent coordinator 116. As another example, the agent 110-1N may request the user 150 to perform one or more actions on the agent system 102 or other systems external to the agent system 102. In this example, the agent 110-1N may request the user 150 to enter entries in a system applications and products (SAP) ordering system before the agent 110-1N can further proceed with the task.

At block 508, the agent coordinator may provide the message via the user interface to the user. For example, the agent coordinator 116 may provide the message via the user interface module 104 to the user 150. As such, the user 150 may be notified to work with the agent service 106 for fulfilling the request of the user 150 in a more time efficient manner. Advantageously, the bidirectional communications facilitated by the agent coordinator 116 allows the user 150 to more efficiently work with agents in the collaborative agent network 110 to meet demands of the user 150.

### Example User Interfaces and Related Functionality

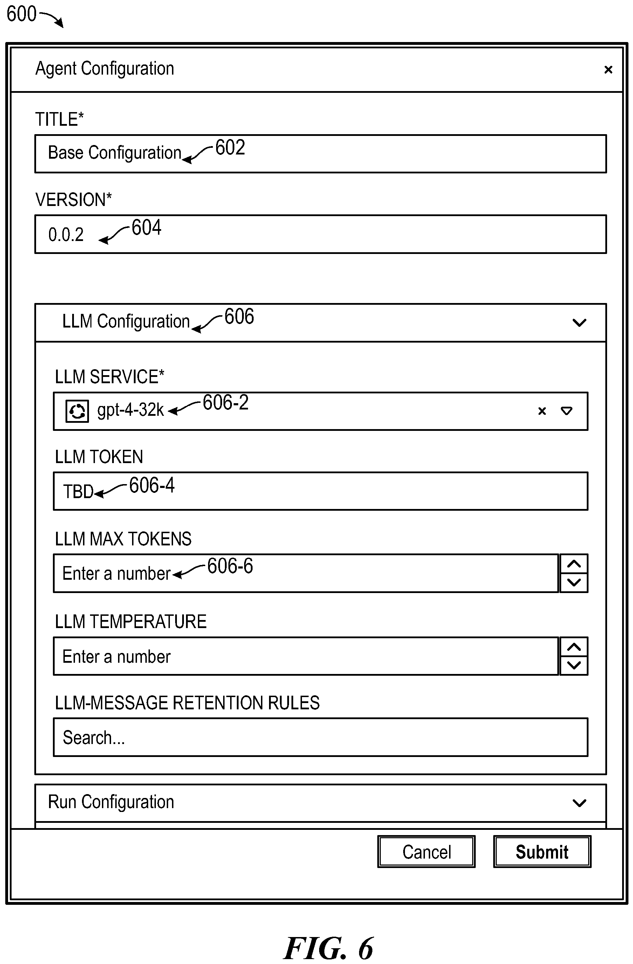

FIGS. 6, 7, 8A, 8B, 9, and 10 show example user interfaces that illustrate utilizing the agent service 106 of the agent system 102 of FIGS. 1A and 1B to automatically solve complex problems through coordination among agents employed by the agent service 106 without being constrained by capabilities of individual agents, according to various implementations of the present disclosure. The example user interfaces illustrated in FIGS. 6, 7, 8A, 8B, 9, and 10 may be presented through the user interface module 104 of the agent system 102 and/or a user interface of the user 150.

The example user interfaces illustrated in FIGS. 6, 7, 8A, 8B, 9, and 10 may allow the user 150 to interact with the agent system 102 for configuring agents in the collaborative agent network 110, interacting with the agents, and verifying results generated by the agents. In various implementations, the user 150 may configure the accessories 105, the agent storage 118, and an ontology, a LLM, tools, other aspects associated with one or more agents of the collaborative agent network 110 through operating on the example user interfaces. For examples, the user 150 may configure which tools (e.g., a calculator or other tools) an agent can utilize to process tasks. The user 150 may also configure types of child-agents to which the agent may handoff tasks or sub-tasks, and maximum number of handoffs that can be utilized by the agent. Additionally and/or optionally, the user 150 may configure types of LLMs and/or machine learning (ML) models accessible to the agent through the example user interfaces. The example user interfaces may further allow the user 150 to view and track various configurations (e.g., through version control mechanisms noted above) that are available to configure an agent or child-agents of the agent. Advantageously, the user 150 may preserve a specific configuration of an agent that is tested to be effective for solving a specific type of problems while experimenting new configurations based on minor or minimal adjustments to the specific configuration without losing the efficacy of the specific configuration by interacting with the example user interfaces.

In various implementations, the user 150 may evaluate or verify results generated by agents of the collaborative agent network 110 through manipulating the example user interfaces. In some examples, the example user interfaces may present information related to an individual run. For example, the information related to the individual run may include the initial prompt and subsequent prompts received by an agent (e.g., the agent 110-11) from the user 150, starting and end timestamps of the individual run, status (e.g., completed, succeeded, failed, or the like) of the individual run, timelines of occurrence of events while the agent executing the individual run, intermediate results generated by the agent, child-agents to which the agent handoffs tasks, number of errors committed by the agent when utilizing some tools, or the like. Advantageously, the example user interfaces may allow the user 150 to more efficiently evaluate or verify performances of agents through, for example, reviewing steps or actions taken by an agent to process a task.

Additionally, example user interfaces may present information related to accessories 105 utilized by agents of the collaborative agent network 110 to process tasks. In various implementations, example user interfaces may visualize relationships between at least some of the accessories 105 utilized by one or more agents of the collaborative agent network 110 for solving some problems. For example, example user interfaces may present interactive graphical representation(s) of at least some of the accessories 105 used by an agent of the collaborative agent network 110. More specifically, interactive graphical representation(s) may represent at least some of the accessories 105 as nodes and represent relationships of at least some of the accessories 105 as edges. For example, an interactive graphical representation may visualize a first accessory utilized by an agent to process a task as a first node, visualize a second accessory utilized by the agent to process the task as a second node, and show that the first node is connected to the second node through an edge, where the edge indicates that the second accessory is generated based on the first accessory. Advantageously, graphical representation(s) of the accessories 105 enables the user 150 to efficiently review and track what accessories 105 are utilized by agents of the collaborative agent network 110 to process tasks and how an accessory is related to another. Additionally and/or optionally, the agent system 102 may allow the user 150 to create one or more accessories 105 by operating on example user interfaces.

As shown in FIG. 6, the user interface 600 can include a display portion 602 that shows a title of a configuration of an agent of the collaborative agent network 110. The title of the configuration of the agent can be editable by the user 150 to facilitate the user to manage configurations that are utilized to configure the agent of the collaborative agent network 110. Here, the display portion 602 states "Base Configuration," which specifies the title of the configuration of the agent (e.g., one of the agents in the collaborative agent network 110) that the user interface 600 is utilized to configure. In various implementations, agent(s) of the collaborative agent network 110 may be configurable based on various settings or parameters, where the agent(s) may share one or more common building blocks (e.g., an agent logic that defines how agents operate and/or interact with each other, tools, and/or users) but may be configured to various configurations using the user interface 600.

The user interface 600 can further include a display portion 604 that shows a version of the configuration of the agent of the collaborative agent network 110. The version of the configuration of the agent can also be editable by the user 150 to facilitate the user to manage configurations that are utilized to configure the agent of the collaborative agent network 110. Here, the display portion 604 shows "0.0.2," indicating the version number of the configuration that the user interface 600 is utilized to configure. Advantageously, version controlled configurations may allow the agent system 102 and/or the user 150 to robustly and effectively track operations of agents of the collaborative agent network 110, adapt agents among various configurations, or contrast strengths and weakness of an agent when operating under disparate configurations.

The user interface 600 can include a display portion 606 that includes various configurations of a LLM utilized by an agent of the collaborative agent network 110. Here, the display portion 606 reads "LLM Configuration," indicating configurations of the LLM employed by the agent can be configured by the user 150 through operating on sub-portion(s) (e.g., a sub-portion 606-2, a sub-portion 606-4, or a sub-portion 606-6) of the display portion 606. The LLM may assist the agent of the collaborative agent network 110 to handle requests from the user 150 and/or process various types of tasks, such as automatically generating texts to summarize a set of documents, conducting analysis based on data contained in articles, tables, spreadsheets, or the like, scheduling distribution of materials based on supply chain constraints and requirements from demand sides, or the like. For example, the agent may allow the user 150 to query internal or third-party data using the LLM (e.g., a QA (question and answer) LLM) that is trained to generate answers from user queries. In various implementations, the LLM utilized by the agent may be locally hosted, cloud managed, accessed via one or more Application Programming Interfaces ("APIs"), and/or any combination of the foregoing and/or the like. Data that may be processed by the agent through using the LLMs may include any type of electronic data, such as text, files, documents, books, manuals, emails, images, audio, video, databases, metadata, positional data (e.g., geo-coordinates), sensor data, web pages, time series data, and/or any combination of the foregoing and/or the like.

As shown in FIG. 6, the sub-portion 606-2 of the display portion 606 can allow the user 150 to switch a model of the LLM employed by the agent. Here, the sub-portion 606-2 shows "gpt-4-32k," indicating a type of the model of the LLM. The sub-portion 606-2 may provide the user 150 the flexibility of easily swapping between various language models employed by the agent to provide various services through configuring the agent using the sub-portion 606-2. For example, the user 150 may swap the LLM (e.g., switching between GPT-4, GPT-3, and GPT-2) for analyzing information to provide recommendations (e.g., to which distribution centers shipment orders should be placed) based on analyses. Such model swapping flexibility provided by the sub-portion 606-2 may be beneficial in various aspects, such as experimentation and adaptation to different models based on specific use cases or requirements, providing versatility and scalability associated with services rendered by the agent system 102.

The display portion 606 can further include at least the sub-portion 606-4 and the sub-portion 606-6 that allows the user 150 to configure various aspects of the LLM that are related to tokens utilized by the LLM. Here, the sub-portion 606-4 shows "TBD," indicating the token(s) that are utilized by the LLM is yet to be defined; the sub-portion 606-6 shows "Enter a number," prompting the user 150 to enter a number of maximum token size of prompts to the LLM. As such, the user 150 may flexibly reconfigure the agent from one LLM configuration to another LLM configuration. Advantageously, the user interface 600 enables the user 150 to swap or switch agent configurations related to LLM(s) employed by the agent for achieving various objectives. For example, the user 150 may feed the same input(s) to two agents that are configured the same except LLMs utilized by the two agents to evaluate or benchmark performances of the LLMs.

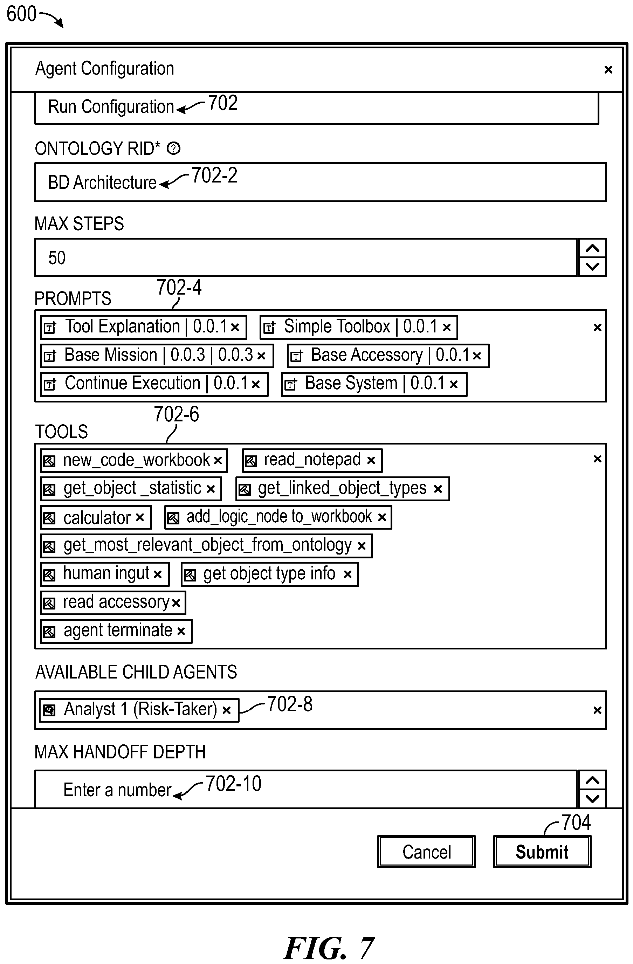

With reference to FIG. 7, the user interface 600 can further allow the user 150 to configure aspects of a run that is to be executed by an agent, such as an ontology, tools, prompts, or child-agents utilized by the agent for executing the run. As shown in FIG. 7, the user interface 600 can include a display portion 702 that includes various configurations of the agent for executing a run that can represent an interaction between the user 150 and the agent system 102 for processing tasks or solving problems received from the user 150. Configurations associated with the run may be set by the user 150 through operating on sub-portions (e.g., a sub-portion 702-2, a sub-portion 702-4, a sub-portion 702-6, a sub-portion 702-8, or a sub-portion 702-10) of the display portion 702, and stored by the agent system 102 to facilitate automation orientation and/or co-pilot orientation. The configurations related to the run may include the initial prompt and subsequent prompts received by the agent from the user, starting and end timestamps of the individual run, status (e.g., completed, succeeded, failed, or the like) of the individual run, timelines of occurrence of events while the agent executing the individual run, intermediate results generated by the agent, child-agents to which the agent handoffs tasks, number of errors committed by the agent when utilizing some tools, or the like. Here, the display portion 702 reads "Run Configuration."

As shown in FIG. 7, the sub-portion 702-2 of the display portion 702 can allow the user 150 to specify an ontology associated with the agent. Here, the sub-portion 702-2 reads "BD Architecture," indicating the ontology associated with the agent may be created based on the notion of business development. Advantageously, when the agent is tasked to solve a problem related to a new subject matter (e.g., business development) during the run, the user 150 may configure the agent to utilize the ontology that is created or updated based on the new subject matter.

The display portion 702 can further include the sub-portion 702-4 that may allow the user 150 to define types of prompts or inputs the agent is to receive for processing tasks during the run. Here, the sub-portion 702-4 lists "Tool Explanation | 0.01," "Simple Toolbox | 0.01," "Base Mission | 0.03 | 0.03," "Base Accessory | 0.01," "Continue Execution | 0.01," and "Base System | 0.01," indicating names and versions of the prompts or inputs that the agent is to receive during execution of the run. For example, "Base Accessory | 0.01" indicates that the agent is to be provided with an accessory with a version number "0.01" for executing the run. Advantageously, the button 704 allows the user 150 to indicate to the agent types of prompts, inputs, or tasks that the agent receives for the run.

The display portion 702 can also include the sub-portion 702-6 that may allow the user 150 to equip the agent with various tools to enable efficient execution of the run. As noted above, the tools may allow the agent to interact with the operational system, a database, the ontology, internal databases and system, and/or external systems. The tools can be any set of logic or rules that can be provided to the agent for the agent's use to obtain additional information, such as by generating a request for access to additional data via a plug-in. The tools can be used by the agent to generate requests (that may be fulfilled by the agent system 102) to perform operations such as querying datasets, processing data including filtering or aggregating data, writing to datasets (e.g., adding or updating rows of a table, editing or updating an obj ect type, updating parameter values for an object instance, generating a new object instance), implementing integrated applications (e.g., an email or SMS application), communicating with external application programming interfaces (APIs), and/or any other functions that communicate with other external or internal components. Here, tools listed in the sub-portion 702-6 include "new_code_workbook," "read_notepad," "get_object_statistic," "get_linked_object_types," "calculator," "add_logic_node_to_workboo k," "read_accessory," "get_most_relevant_object_from_ontology," "get_object_type_info," "agent_terminate," "human_input."

As shown in FIG. 7, the display portion 702 may further include the sub-portion 702-8 that may allow the user 150 to configure available child-agent(s) to which the agent may handoff tasks or sub-tasks. Here, the sub-portion 702-8 reads "Analyst 1 [Risk-Taker]," indicating the child agent may be specialized in risk taking analysis. For example, the agent can be the agent 110-11 of FIG. 1B and an available child-agent specified by the sub-portion 702-8 can be the agent 110-21 of FIG. 1B. When the agent 110-11 determines that a task which the agent 110-11 is processing requires specialized capability of analyzing risks, the agent 110-11 may handoff some or all of the task to the agent 110-21 that has been trained or tested to efficiently analyze risks, where the agent 110-21 has been configured by the user 150 and/or the agent system 102 to be available to the agent 110-11 through operating on the sub-portion 702-8.

The display portion 702 may further include the sub-portion 702-10 that may allow the user 150 to set a maximum number of handoffs for the agent. Here, the sub-portion 702-10 reads "Enter a number," indicating to the user 150 to input a number to limit the number of handoffs for the agent during execution of the run. Advantageously, limiting the number of handoffs on some or all types of tasks may increase security of the agent system 102.

Although not illustrated in FIGS. 6-7, the user interface module 104 may further allow the user 150 to configure various types of handoffs that an agent can use during a run. For example, through the user interface module 104 the user 150 may configure the agent to be able to use blocking handoffs, where the agent may handoff a task to a child agent, pauses until receiving a result from the child agent, and then proceeds after receiving the result. As another example, through the user interface module 104 the user 150 may configure the agent to be able to use parallel handoffs, where the agent may handoff tasks in parallel to multiple child agents, and, without waiting for results from the child agents, continues to process other tasks or sub-tasks that the agent is processing without handing off. Advantageously, various handoffs schemes configurable by the user 150 may enable the agent service 106 to more flexibly and efficiently utilize agents in the collaborative agent network 110 to process tasks based on characteristics of the tasks.

The user interface 600 can also include a button 704 that may allow the user 150 to submit the configurations described in FIGS. 6-7 above to configure the agent for processing tasks. By clicking on the button 704, the user 150 may cause the agent system 102 (e.g., the agent service 106) to configure the agent based on demands of the user 150. Advantageously, allowing the user 150 to configure agents of the collaborative agent network 110 based on various user objectives may enhance scalability and reusability of the agent system 102.

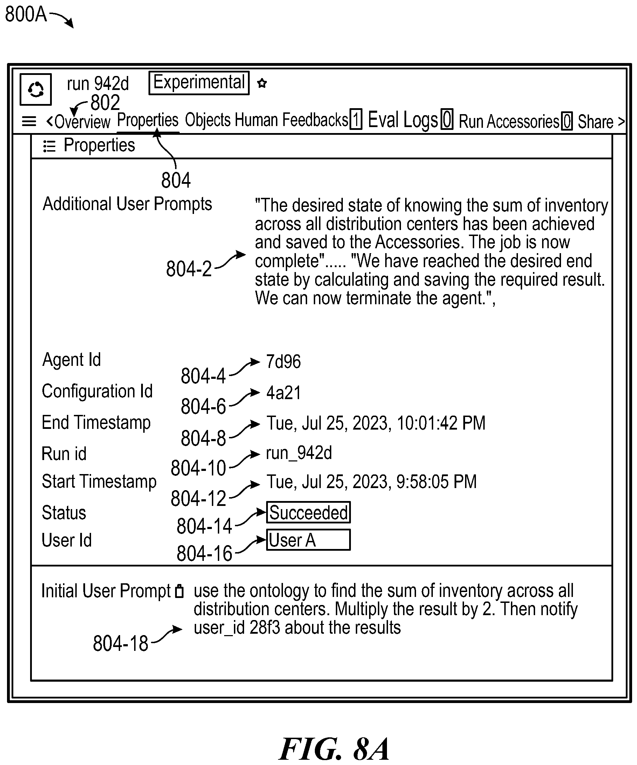

FIGS. 8A-8B show example user interfaces 800A and 800B depicting information related to a run to allow the user 150 to track or monitor problem solving processes went through by agents of the collaborative agent network 110 to evaluate the soundness of steps taken or decisions made by agents of the collaborative agent network 110. The agent system 102 may capture and synchronize data and/or information associated with a run into the ontology 205 associated with the database 209 of the database module 108. As such, data utilized by the agent system 102 may be organized and linked to relevant context for providing a comprehensive knowledge base for evaluation, verification, and analysis through presenting the example user interfaces 800A and 800B to the user 150.

In various implementations, the agent system 102 may utilize the interaction data object 210 to store information and/or data associated with a run of the user 150 in the database 209 of the database module 108 for review and evaluation by the user 150. The interaction data object 210 may include data objects or may be linked to data object(s) that represent documents, data sources, timestamps of events (e.g., when one or more user queries of the user are received and/or responded), profiles of the user 150, or the like that are associated with the run. For example, initial and subsequent prompts from the user 150 and/or steps taken by agents of the collaborative agent network 110 to fulfill objectives of the user 150 can be stored by the agent system 102 using the interaction data object 210 and/or data objects associated with the interaction data object for later evaluation. Besides evaluation by the user 150, the agent system 102 may utilize the interaction data object 210 and/or additional data objects to automatically generate evaluation reports for various purposes, such as evaluating the performances of agents of the collaborative agent network 110. Advantageously, interaction data objects stored in the database 209 of the database module 108 may enable information associated with the run to be easily reviewable. The agent system 102 may further utilize information stored using the interaction data object 210 and/or other data objects to evaluate if agents of the collaborative agent network 110 are not processing tasks efficiently.

As illustrated in FIG. 8A, the user interface 800A can include a display portion 802 and a display portion 804 that enable the user 150 to navigate information related to a run. Here, the display portion 802 reads "Overview," indicating the user 150 can review overview of the run by navigating to the display portion 802. The display portion 804 reads "Properties," indicating properties associated with the run can be reviewed by the user 150 by navigating to the display portion 804. As indicated in the user interface 800A, the user 150 may be navigating information associated with the run within the display portion 804.

The user interface 800A can further include a display portion 804-2, a display portion 804-4, a display portion 804-6, a display portion 804-8, a display portion 804-10, a display portion 804-12, a display portion 804-14, a display portion 804-16, and a display portion 804-18 that illustrate various properties associated with a run. The display portion 804-18 shows an initial user prompt from the user 150 to the agent system 102 for the run. Here, the display portion 804-18 reads "use the ontology to find the sum of inventory across all distribution centers. Multiply result by 2. Then notify user_id 28f3 about the results." The display portion 804-18 may indicate to an agent (e.g. the agent that is configured through the example user interface 600) of the collaborative agent network 110 to use the ontology specified in the sub-portion 702-2 to process a task (e.g., find the sum of inventory across all distribution centers) specified by the initial user prompt.

The display portion 804-2 shows additional user prompts received by the agent system 102 from the user 150 during the run. Here, the display portion 804-2 reads "The desired state of knowing the sum of inventory across all distribution centers has been achieved and saved to the accessories. The job is now complete.... We have reached the desired end state by calculating and saving the required result. We can now terminate the agent." As such, the display portion 804-2 indicates that the user 150 has instructed the agent system 102 (e.g., the agent service 106) to terminate processing the task after the request from the user 150 is fulfilled.

The display portion 804-4 shows an identification number (e.g., an agent ID) of an agent that is employed in the run to fulfill request(s) from the user. Here, the display portion 804-4 reads "7d96." The display portion 804-4 may enable the user 150 to effectively identify the agent that is utilized to execute the run such that the user 150 may efficiently associate the performance with the agent that is responsible for executing the run.

The display portion 804-6 shows an identification number of a configuration (e.g., a configuration ID) of the agent of the display portion 804-4. Here, the display portion 804-6 reads "4a21," specifying the ID of the configuration that is used to configure the agent for executing the run. Advantageously, assigning IDs to configurations of an agent may allow the user 150 and/or the agent system 102 to robustly and effectively track operations of agents, adapt agents among various configurations, or contrast strengths and weakness of an agent when operating under disparate configurations.

The display portion 804-8 indicates an end time (e.g., an end timestamp) of the run. Here, the display portion 804-8 reads "Tue, July 25, 2023, 10:01:42 PM," indicating the time the run completed. The display portion 804-12 indicates a start time (e.g., a start timestamp) of the run. Here, the display portion 804-12 states "Tue, July 25, 2023 9:58:05 PM," indicating the time the time the run started. Advantageously, the display portion 804-8 and the display portion 804-12 allow the user 150 to gauge amount of time the agent with the agent ID shown in display portion 804-4 takes to complete the run.

The display portion 804-10 shows an identification number (e.g., a run ID) of the run. Here, the display portion 804-10 shows "run_942d." The display portion 804-14 shows a status of the run. Here, the display portion 804-14 reads "Succeeded," indicating that the run has been successfully completed and the request(s) of the user 150 for the run have been fulfilled. The display portion 804-16 shows an identification (e.g., a user ID) of the user 150 that may initiate the run. Here, the display portion 804-16 shows "User A."

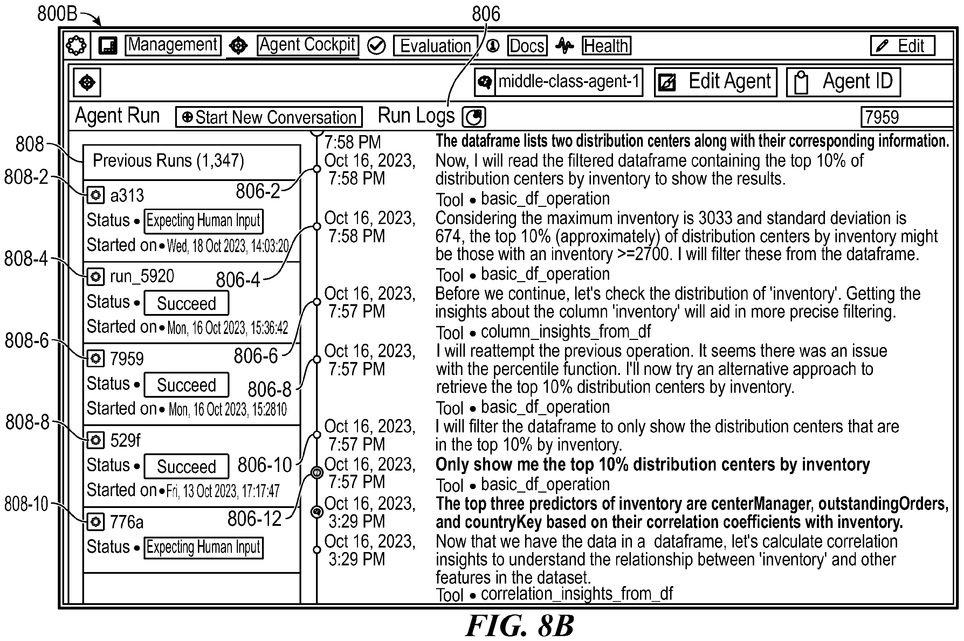

FIG. 8B illustrates the example user interface 800B presenting a log 806 of a run to a user (e.g., the user 150). The agent system 102 may generate and maintain the log 806 to record events, timelines, received inputs, or generated outputs while an agent of the collaborative agent network 110 processes tasks during the run. The log 806 may describe events occurred while the agent processes tasks and corresponding timestamps, inputs received from users and/or the system, and/or results generated by the agent while processing tasks during the run. Although not illustrated in FIG. 8B, the log 806 may further record number of errors committed by the agent while processing tasks. Advantageously, the log 806 may allow the user 150 to effectively monitor or evaluate performances of agents during the run for taking appropriate measures (e.g., re-train an agent for processing a particular type of task in response to monitoring a high error number from the agent while processing the particular type of task).

As shown in FIG. 8B, the log 806 may include a message portion 806-12, which may indicate a supplemental instruction provided by the user 150 to the agent system 102 through the user interface module 104. The supplemental instruction (as well as initial prompts from the user 150) may be received by the agent coordinator 116, which transmitted to the agent that executes the run. Here, the message portion 806-12 reads "only show me the top 10% distribution centers by inventory" with a timestamp of "Oct 16, 2023, 7:57PM." The message portion 806-12 allows the user 150 to review when user input(s) is provided to the agent during the run.

The log 806 may also include a message portion 806-2, a message portion 806-4, a message portion 806-6, a message portion 806-8, a message portion 806-10, and a message portion 806-12. Each of the message portions 806-2, 806-4, 806-6, 806-8, and 806-10 indicates an action taken by an agent during the run and a time the action was taken in response to receiving input(s) as indicated in the message portion 806-12 from the user 150. For example, the message portion 806-2 indicates a time when the agent read filtered dataframe containing the top 10% of distribution centers by inventory. Here, the message portion 806-2 reads "Now, I will read the filtered dataframe containing the top 10% of distribution centers by inventory to show the results" with a timestamp on "Oct 16, 2023, 7:58PM." As such the message portion 806-2 allows the user 150 to review the action taken by the agent for various purposes, such as reviewing the soundness of steps taken or decision made by the agent responsive to user inputs.

The user interface 800B may further include a display portion 808 that lists previous runs executed by one or more agents of the collaborative agent network 110 for fulfilling requests from the user 150. Here, the display portion 808 states "Previous Run (1,347)," indicating the agent system 102 may have executed 1347 runs for the user 150. Under the display portion 808 are a sub-portion 808-2, a sub-portion 808-4, a sub-portion 808-6, a sub-portion 808-8, and a sub-portion 808-10. Each of the sub-portions 808-2, 808-4, 808-6, 808-8, and 808-10 may respectively summarize a previous run executed by the agent system 102 for the user 150. For example, the sub-portion 808-8 shows an identification number (e.g., 529f) of a previous run, along with a status (e.g., "Succeeded") and start time (e.g., "Fri, 13 Oct 2023, 17:17:47") of executing the previous run.

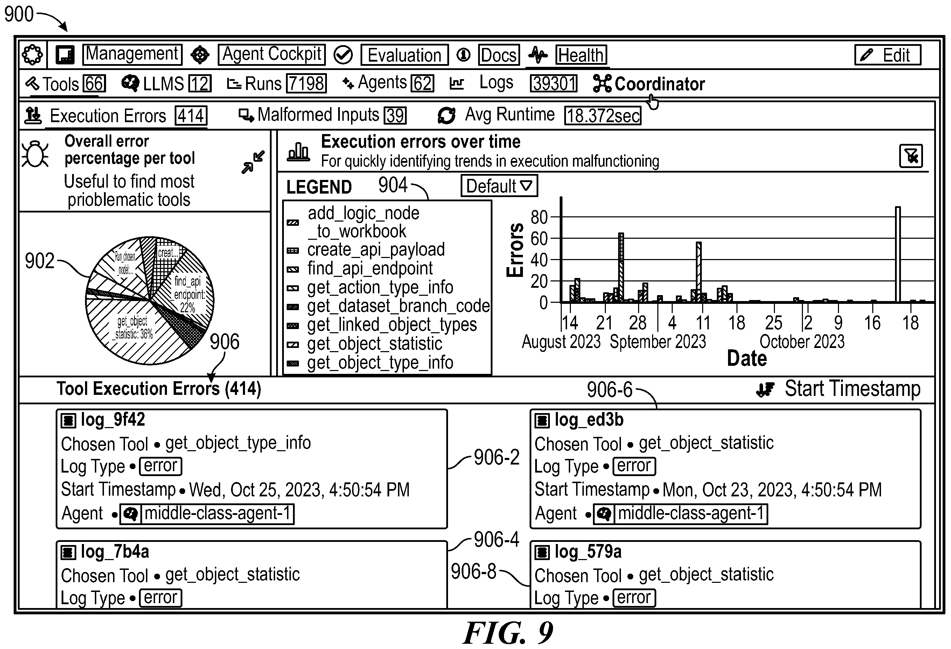

With reference to FIG. 9, an example user interface 900 illustrates errors committed by agents of the collaborative agent network 110 while using various tools for processing tasks requested by the user 150. The errors committed by agents of the collaborative agent network 110 may be recorded in a log generated and stored by the agent system 102 in a storage (e.g., the database module 108) of the agent system 102. Advantageously, the errors allow the user 150 to evaluate performance of the agents of the collaborative agent network 110 while using various tools, enabling the user 150 to provide feedback to the agent system 102 for improving the performances of the agents of the collaborative agent network 110. Additionally, error information associated with agents of the collaborative agent network 110 may be used by the agent coordinator 116 to supervise or manage the agents of the collaborative agent network 110. For example, the agent coordinator 116 may pause the agent 110-11 if the agent coordinator 116 determines that the agent 110-11 is committing more errors while processing a task using a particular tool, and instruct the agent 110-11 to use alternative tool(s) for processing the task.

The user interface 900 may include a display portion 902 and a display portion 904. Here, the display portion 902 presents a pie chart illustrating percentages of errors committed by agents while using particular tools. For example, the display portion 902 shows that 36% of total errors committed by agents while using tools come from using a tool "get object statistic" and 22% of total errors committed by agents while using tools come from using another tool "find_api_endpoint." The display portion 904 provides legends of various tools illustrated in the pie chart of the display portion 902 for the user 150 to more efficiently identify tools with which agents of the collaborative agent network 110 committed most errors.

The user interface may include a display portion 906 that provides logs that record more detailed information about the errors depicted in the display portion 902 and the display portion 904. The display portion 906 may include sub-portions 906-2, 906-4, 906-6 and 906-8 that respectively provide an error log of one of the errors depicted in the display portion 902. For example, the sub-portion 906-2 includes an error log associated with a tool "get_object_type_info." Here, the sub-portion 906-2 includes information that reads "log_9f42" (indicating an identification number of the error log), "Chosen Tool: get_object_type_info" (indicating a name of the tool used by an agent while committing the error), "Log Type: error" (indicating a type of the log is an error log), "Start Timestamps: Wed, Oct 25, 2023, 4:50:54 PM" (indicating a start time of the log), and "Agent: middle-class-agent-1" (indicating a name of the agent that commits the error while using the tool).

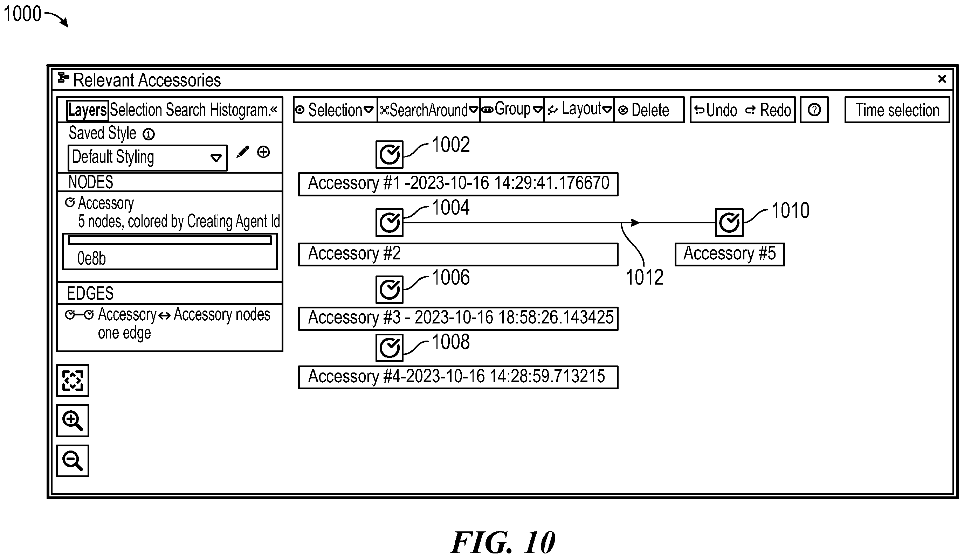

With reference to FIG. 10, an example user interface 1000 illustrating relationships among accessories 105 utilized by the agent system 102 will be described. The user interface 1000 includes a node 1002, a node 1004, a node 1006, a node 1008, a node 1010, and an edge 1012 that connects the node 1004 and the node 1010. Each of the nodes 1002, 1004, 1006, 1008, and 1010 represents an accessory that is used by agent(s) of the collaborative agent network 110 for processing tasks submitted by the user 150. For example, the node 1006 represents an accessory (e.g., Accessory #3) along with a time that indicates a time (e.g., 2023-10-16 18:58:26) the accessory was created.

As noted above, the agent system 102 can track a lineage of an accessory (e.g., one of the accessories 105) to know based on what the accessory is generated and/or whether the accessory is further utilized to generate other information. For example, the agent system 102 can record a lineage of the accessory, where the lineage shows what tool(s) are utilized to generate the accessory and the accessory are utilized to generate other accessories. The lineage of the accessory may include metadata that can enable users or the system to efficiently track from where the accessory comes into being and to where the accessory is used. In various implementations, lineages of accessories 105 may be presented to users through interactive graphical representations that include nodes (e.g., representing accessories) and/or edges (e.g., representing connections between accessories) of graphical user interfaces (GUIs) as illustrated in the user interface 1000. Advantageously, the lineage of the accessories 105 enables the agent system 102 to more efficiently verify or evaluate the usefulness of the accessories 105. Once an accessory is stored in the agent storage 118, the agent system 102 may further evaluate correctness or accuracy of information contained in the accessory. For example, if an agent of the collaborative agent network 110 or the agent system 102 determines that the accessory contains accurate information, the agent or the agent system 102 may keep the accessory in an agent storage. But if the agent or the agent system 102 determines that the accessory contains inaccurate information, the agent or the agent system 102 may update the accessory and/or delete the accessory from the agent storage 118.

As shown in the user interface 1000, the "Accessory #2" represented by the node 1004 is connected to the "Accessory #5" represented by the node 1010 through the edge 1012 that points from the node 1004 toward the node 1010. As such, the edge 1012 indicates that the "Accessory #5" was created based on "Accessory #2."

### Additional Example Implementations and Details

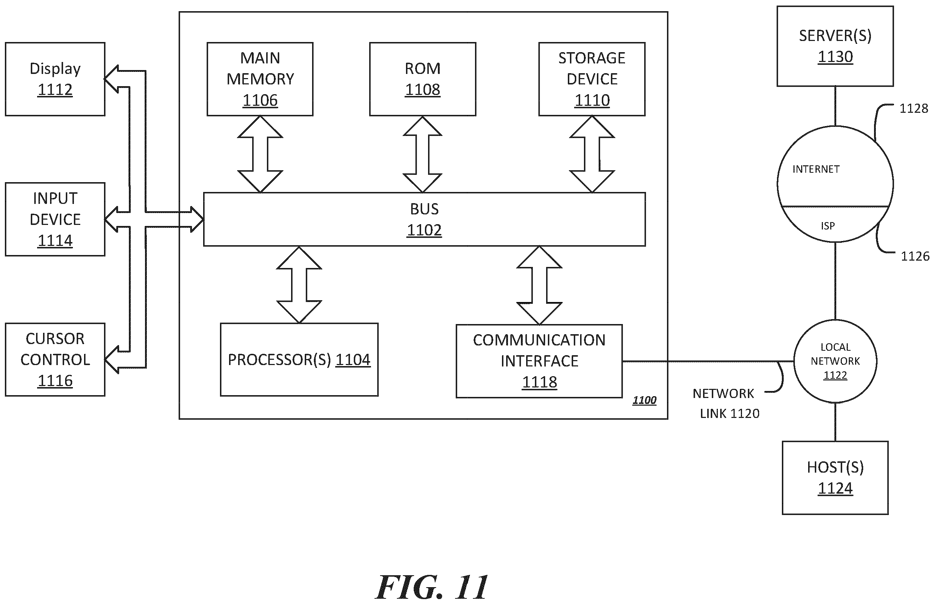

In an implementation of the system (e.g., one or more aspects of the agent system 102, one or more aspects of the computing environment 100, and/or the like) may comprise, or be implemented in, a "virtual computing environment". As used herein, the term "virtual computing environment" should be construed broadly to include, for example, computer-readable program instructions executed by one or more processors (e.g., as described in the example of FIG. 11) to implement one or more aspects of the modules and/or functionality described herein. Further, in this implementation, one or more services/modules/engines and/or the like of the system may be understood as comprising one or more rules engines of the virtual computing environment that, in response to inputs received by the virtual computing environment, execute rules and/or other program instructions to modify operation of the virtual computing environment. For example, a request received from a user computing device may be understood as modifying operation of the virtual computing environment to cause the request access to a resource from the system. Such functionality may comprise a modification of the operation of the virtual computing environment in response to inputs and according to various rules. Other functionality implemented by the virtual computing environment (as described throughout this disclosure) may further comprise modifications of the operation of the virtual computing environment, for example, the operation of the virtual computing environment may change depending on the information gathered by the system. Initial operation of the virtual computing environment may be understood as an establishment of the virtual computing environment. In some implementations the virtual computing environment may comprise one or more virtual machines, containers, and/or other types of emulations of computing systems or environments. In some implementations the virtual computing environment may comprise a hosted computing environment that includes a collection of physical computing resources that may be remotely accessible and may be rapidly provisioned as needed (commonly referred to as "cloud" computing environment).

Implementing one or more aspects of the system as a virtual computing environment may advantageously enable executing different aspects or modules of the system on different computing devices or processors, which may increase the scalability of the system. Implementing one or more aspects of the system as a virtual computing environment may further advantageously enable sandboxing various aspects, data, or services/modules of the system from one another, which may increase security of the system by preventing, e.g., malicious intrusion into the system from spreading. Implementing one or more aspects of the system as a virtual computing environment may further advantageously enable parallel execution of various aspects or modules of the system, which may increase the scalability of the system. Implementing one or more aspects of the system as a virtual computing environment may further advantageously enable rapid provisioning (or de-provisioning) of computing resources to the system, which may increase scalability of the system by, e.g., expanding computing resources available to the system or duplicating operation of the system on multiple computing resources. For example, the system may be used by thousands, hundreds of thousands, or even millions of users simultaneously, and many megabytes, gigabytes, or terabytes (or more) of data may be transferred or processed by the system, and scalability of the system may enable such operation in an efficient and/or uninterrupted manner.

Various implementations of the present disclosure may be a system, a method, and/or a computer program product at any possible technical detail level of integration. The computer program product may include a computer-readable storage medium (or mediums) having computer-readable program instructions thereon for causing a processor to carry out aspects of the present disclosure.

For example, the functionality described herein may be performed as software instructions are executed by, and/or in response to software instructions being executed by, one or more hardware processors and/or any other suitable computing devices. The software instructions and/or other executable code may be read from a computer-readable storage medium (or mediums). Computer-readable storage mediums may also be referred to herein as computer-readable storage or computer-readable storage devices.

The computer-readable storage medium can be a tangible device that can retain and store data and/or instructions for use by an instruction execution device. The computer-readable storage medium may be, for example, but is not limited to, an electronic storage device (including any volatile and/or non-volatile electronic storage devices), a magnetic storage device, an optical storage device, an electromagnetic storage device, a semiconductor storage device, or any suitable combination of the foregoing. A non-exhaustive list of more specific examples of the computer-readable storage medium includes the following: a portable computer diskette, a hard disk, a solid state drive, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, and any suitable combination of the foregoing. A computer-readable storage medium, as used herein, is not to be construed as being transitory signals per se, such as radio waves or other freely propagating electromagnetic waves, electromagnetic waves propagating through a waveguide or other transmission media (e.g., light pulses passing through a fiber-optic cable), or electrical signals transmitted through a wire.

Computer-readable program instructions described herein can be downloaded to respective computing/processing devices from a computer-readable storage medium or to an external computer or external storage device via a network, for example, the Internet, a local area network, a wide area network and/or a wireless network. The network may comprise copper transmission cables, optical transmission fibers, wireless transmission, routers, firewalls, switches, gateway computers, and/or edge servers. A network adapter card or network interface in each computing/processing device receives computer-readable program instructions from the network and forwards the computer-readable program instructions for storage in a computer-readable storage medium within the respective computing/processing device.

Computer-readable program instructions (as also referred to herein as, for example, "code," "instructions," "module," "application," "software application," "service," and/or the like) for carrying out operations of the present disclosure may be assembler instructions, instruction-set-architecture (ISA) instructions, machine instructions, machine dependent instructions, microcode, firmware instructions, state-setting data, configuration data for integrated circuitry, or either source code or object code written in any combination of one or more programming languages, including an object oriented programming language such as Smalltalk, C++, or the like, and procedural programming languages, such as the "C" programming language or similar programming languages. Computer-readable program instructions may be callable from other instructions or from itself, and/or may be invoked in response to detected events or interrupts. Computer-readable program instructions configured for execution on computing devices may be provided on a computer-readable storage medium, and/or as a digital download (and may be originally stored in a compressed or installable format that requires installation, decompression, or decryption prior to execution) that may then be stored on a computer-readable storage medium. Such computer-readable program instructions may be stored, partially or fully, on a memory device (e.g., a computer-readable storage medium) of the executing computing device, for execution by the computing device. The computer-readable program instructions may execute entirely on a user's computer (e.g., the executing computing device), partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider). In some implementations, electronic circuitry including, for example, programmable logic circuitry, field-programmable gate arrays (FPGA), or programmable logic arrays (PLA) may execute the computer-readable program instructions by utilizing state information of the computer-readable program instructions to personalize the electronic circuitry, in order to perform aspects of the present disclosure.

Aspects of the present disclosure are described herein with reference to flowchart illustrations and/or block diagrams of methods, apparatus (systems), and computer program products according to implementations of the disclosure. It will be understood that each block of the flowchart illustrations and/or block diagrams, and combinations of blocks in the flowchart illustrations and/or block diagrams, can be implemented by computer-readable program instructions.

These computer-readable program instructions may be provided to a processor of a general-purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks. These computer-readable program instructions may also be stored in a computer-readable storage medium that can direct a computer, a programmable data processing apparatus, and/or other devices to function in a particular manner, such that the computer-readable storage medium having instructions stored therein comprises an article of manufacture including instructions which implement aspects of the function/act specified in the flowchart(s) and/or block diagram(s) block or blocks.

The computer-readable program instructions may also be loaded onto a computer, other programmable data processing apparatus, or other device to cause a series of operational steps to be performed on the computer, other programmable apparatus or other device to produce a computer implemented process, such that the instructions which execute on the computer, other programmable apparatus, or other device implement the functions/acts specified in the flowchart and/or block diagram block or blocks. For example, the instructions may initially be carried on a magnetic disk or solid-state drive of a remote computer. The remote computer may load the instructions and/or modules into its dynamic memory and send the instructions over a telephone, cable, or optical line using a modem. A modem local to a server computing system may receive the data on the telephone/cable/optical line and use a converter device including the appropriate circuitry to place the data on a bus. The bus may carry the data to a memory, from which a processor may retrieve and execute the instructions. The instructions received by the memory may optionally be stored on a storage device (e.g., a solid-state drive) either before or after execution by the computer processor.

The flowcharts and block diagrams in the Figures illustrate the architecture, functionality, and operation of possible implementations of systems, methods, and computer program products according to various implementations of the present disclosure. In this regard, each block in the flowchart or block diagrams may represent a service, module, segment, or portion of instructions, which comprises one or more executable instructions for implementing the specified logical function(s). In some alternative implementations, the functions noted in the blocks may occur out of the order noted in the Figures. For example, two blocks shown in succession may, in fact, be executed substantially concurrently, or the blocks may sometimes be executed in the reverse order, depending upon the functionality involved. In addition, certain blocks may be omitted or optional in some implementations. The methods and processes described herein are also not limited to any particular sequence, and the blocks or states relating thereto can be performed in other sequences that are appropriate.

It will also be noted that each block of the block diagrams and/or flowchart illustration, and combinations of blocks in the block diagrams and/or flowchart illustration, can be implemented by special purpose hardware-based systems that perform the specified functions or acts or carry out combinations of special purpose hardware and computer instructions. For example, any of the processes, methods, algorithms, elements, blocks, applications, or other functionality (or portions of functionality) described in the preceding sections may be embodied in, and/or fully or partially automated via, electronic hardware such application-specific processors (e.g., application-specific integrated circuits (ASICs)), programmable processors (e.g., field programmable gate arrays (FPGAs)), application-specific circuitry, and/or the like (any of which may also combine custom hard-wired logic, logic circuits, ASICs, FPGAs, and/or the like with custom programming/execution of software instructions to accomplish the techniques).

Any of the above-mentioned processors, and/or devices incorporating any of the above-mentioned processors, may be referred to herein as, for example, "computers," "computer devices," "computing devices," "hardware computing devices," "hardware processors," "processing units," and/or the like. Computing devices of the above implementations may generally (but not necessarily) be controlled and/or coordinated by operating system software, such as Mac OS, iOS, Android, Chrome OS, Windows OS (e.g., Windows XP, Windows Vista, Windows 7, Windows 8, Windows 10, Windows 11, Windows Server, and/or the like), Windows CE, Unix, Linux, SunOS, Solaris, Blackberry OS, VxWorks, or other suitable operating systems. In other implementations, the computing devices may be controlled by a proprietary operating system. Conventional operating systems control and schedule computer processes for execution, perform memory management, provide file system, networking, I/O services, and provide a user interface functionality, such as a graphical user interface ("GUI"), among other things.

For example, FIG. 11 shows a block diagram that illustrates a computer system 1100 upon which various implementations and/or aspects (e.g., one or more aspects of the computing environment 100, one or more aspects of the agent system 102, one or more aspects of the user 150, one or more aspects of the data processing service 120, one or more aspects of the LLMs 130a and 130b, and/or the like) may be implemented. Multiple such computer systems 1100 may be used in various implementations of the present disclosure. Computer system 1100 includes a bus 1102 or other communication mechanism for communicating information, and a hardware processor, or multiple processors, 1004 coupled with bus 1102 for processing information. Hardware processor(s) 1104 may be, for example, one or more general purpose microprocessors.

Computer system 1100 also includes a main memory 1106, such as a random-access memory (RAM), cache and/or other dynamic storage devices, coupled to bus 1102 for storing information and instructions to be executed by processor 1104. Main memory 1106 also may be used for storing temporary variables or other intermediate information during execution of instructions to be executed by processor 1104. Such instructions, when stored in storage media accessible to processor 1104, render computer system 1100 into a special-purpose machine that is customized to perform the operations specified in the instructions. The main memory 1106 may, for example, include instructions to implement server instances, queuing modules, memory queues, storage queues, user interfaces, and/or other aspects of functionality of the present disclosure, according to various implementations.

Computer system 1100 further includes a read only memory (ROM) 1108 or other static storage device coupled to bus 1102 for storing static information and instructions for processor 1104. A storage device 1110, such as a magnetic disk, optical disk, or USB thumb drive (Flash drive), and/or the like, is provided and coupled to bus 1102 for storing information and instructions.

Computer system 1100 may be coupled via bus 1102 to a display 1112, such as a cathode ray tube (CRT) or LCD display (or touch screen), for displaying information to a computer user. An input device 1114, including alphanumeric and other keys, is coupled to bus 1102 for communicating information and command selections to processor 1104. Another type of user input device is cursor control 1116, such as a mouse, a trackball, or cursor direction keys for communicating direction information and command selections to processor 1104 and for controlling cursor movement on display 1112. This input device typically has two degrees of freedom in two axes, a first axis (e.g., x) and a second axis (e.g., y), that allows the device to specify positions in a plane. In some implementations, the same direction information and command selections as cursor control may be implemented via receiving touches on a touch screen without a cursor.

Computer system 1100 may include a user interface module to implement a GUIthat may be stored in a mass storage device as computer executable program instructions that are executed by the computing device(s). Computer system 1100 may further, as described below, implement the techniques described herein using customized hard-wired logic, one or more ASICs or FPGAs, firmware and/or program logic which in combination with the computer system causes or programs computer system 1100 to be a special-purpose machine. According to one implementation, the techniques herein are performed by computer system 1100 in response to processor(s) 1104 executing one or more sequences of one or more computer-readable program instructions contained in main memory 1106. Such instructions may be read into main memory 1106 from another storage medium, such as storage device 1110. Execution of the sequences of instructions contained in main memory 1106 causes processor(s) 1104 to perform the process steps described herein. In alternative implementations, hard-wired circuitry may be used in place of or in combination with software instructions.

Various forms of computer-readable storage media may be involved in carrying one or more sequences of one or more computer-readable program instructions to processor 1104 for execution. For example, the instructions may initially be carried on a magnetic disk or solid-state drive of a remote computer. The remote computer can load the instructions into its dynamic memory and send the instructions over a telephone line using a modem. A modem local to computer system 1100 can receive the data on the telephone line and use an infra-red transmitter to convert the data to an infra-red signal. An infra-red detector can receive the data carried in the infra-red signal and appropriate circuitry can place the data on bus 1102. Bus 1102 carries the data to main memory 1106, from which processor 1104 retrieves and executes the instructions. The instructions received by main memory 1106 may optionally be stored on storage device 1110 either before or after execution by processor 1104.

Computer system 1100 also includes a communication interface 1118 coupled to bus 1102. Communication interface 1118 provides a two-way data communication coupling to a network link 1120 that is connected to a local network 1122. For example, communication interface 1118 may be an integrated services digital network (ISDN) card, cable modem, satellite modem, or a modem to provide a data communication connection to a corresponding type of telephone line. As another example, communication interface 1118 may be a local area network (LAN) card to provide a data communication connection to a compatible LAN (or WAN component to communicated with a WAN). Wireless links may also be implemented. In any such implementation, communication interface 1118 sends and receives electrical, electromagnetic, or optical signals that carry digital data streams representing various types of information.

Network link 1120 typically provides data communication through one or more networks to other data devices. For example, network link 1120 may provide a connection through local network 1122 to a host computer 1124 or to data equipment operated by an Internet Service Provider (ISP) 1026. ISP 1126 in turn provides data communication services through the worldwide packet data communication network now commonly referred to as the "Internet" 1028. Local network 1122 and Internet 1128 both use electrical, electromagnetic, or optical signals that carry digital data streams. The signals through the various networks and the signals on network link 1120 and through communication interface 1118, which carry the digital data to and from computer system 1100, are example forms of transmission media.

Computer system 1100 can send messages and receive data, including program code, through the network(s), network link 1120 and communication interface 1118. In the Internet example, a server 1130 might transmit a requested code for an application program through Internet 1128, ISP 1126, local network 1122 and communication interface 1118.

The received code may be executed by processor 1104 as it is received, and/or stored in storage device 1110, or other non-volatile storage for later execution.

As described above, in various implementations certain functionality may be accessible by a user through a web-based viewer (such as a web browser), or other suitable software program). In such implementations, the user interface may be generated by a server computing system and transmitted to a web browser of the user (e.g., running on the user's computing system). Alternatively, data (e.g., user interface data) necessary for generating the user interface may be provided by the server computing system to the browser, where the user interface may be generated (e.g., the user interface data may be executed by a browser accessing a web service and may be configured to render the user interfaces based on the user interface data). The user may then interact with the user interface through the web-browser. User interfaces of certain implementations may be accessible through one or more dedicated software applications. In certain implementations, one or more of the computing devices and/or systems of the disclosure may include mobile computing devices, and user interfaces may be accessible through such mobile computing devices (for example, smartphones and/or tablets).

Many variations and modifications may be made to the above-described implementations, the elements of which are to be understood as being among other acceptable examples. All such modifications and variations are intended to be included herein within the scope of this disclosure. The foregoing description details certain implementations. It will be appreciated, however, that no matter how detailed the foregoing appears in text, the systems and methods can be practiced in many ways. As is also stated above, it should be noted that the use of particular terminology when describing certain features or aspects of the systems and methods should not be taken to imply that the terminology is being re-defined herein to be restricted to including any specific characteristics of the features or aspects of the systems and methods with which that terminology is associated.

Conditional language, such as, among others, "can," "could," "might," or "may," unless specifically stated otherwise, or otherwise understood within the context as used, is generally intended to convey that certain implementations include, while other implementations do not include, certain features, elements, and/or steps. Thus, such conditional language is not generally intended to imply that features, elements and/or steps are in any way required for one or more implementations or that one or more implementations necessarily include logic for deciding, with or without user input or prompting, whether these features, elements and/or steps are included or are to be performed in any particular implementation.

The term "substantially" when used in conjunction with the term "real-time" forms a phrase that will be readily understood by a person of ordinary skill in the art. For example, it is readily understood that such language will include speeds in which no or little delay or waiting is discernible, or where such delay is sufficiently short so as not to be disruptive, irritating, or otherwise vexing to a user.

Conjunctive language such as the phrase "at least one of X, Y, and Z," or "at least one of X, Y, or Z," unless specifically stated otherwise, is to be understood with the context as used in general to convey that an item, term, and/or the like may be either X, Y, or Z, or a combination thereof. For example, the term "or" is used in its inclusive sense (and not in its exclusive sense) so that when used, for example, to connect a list of elements, the term "or" means one, some, or all of the elements in the list. Thus, such conjunctive language is not generally intended to imply that certain implementations require at least one of X, at least one of Y, and at least one of Z to each be present.

The term "a" as used herein should be given an inclusive rather than exclusive interpretation. For example, unless specifically noted, the term "a" should not be understood to mean "exactly one" or "one and only one"; instead, the term "a" means "one or more" or "at least one," whether used in the claims or elsewhere in the specification and regardless of uses of quantifiers such as "at least one," "one or more," or "a plurality" elsewhere in the claims or specification.

The term "comprising" as used herein should be given an inclusive rather than exclusive interpretation. For example, a general-purpose computer comprising one or more processors should not be interpreted as excluding other computer components, and may possibly include such components as memory, input/output devices, and/or network interfaces, among others.

While the above detailed description has shown, described, and pointed out novel features as applied to various implementations, it may be understood that various omissions, substitutions, and changes in the form and details of the devices or processes illustrated may be made without departing from the spirit of the disclosure. As may be recognized, certain implementations of the inventions described herein may be embodied within a form that does not provide all of the features and benefits set forth herein, as some features may be used or practiced separately from others. The scope of certain inventions disclosed herein is indicated by the appended claims rather than by the foregoing description. All changes which come within the meaning and range of equivalency of the claims are to be embraced within their scope.

### Example Clauses

Examples of implementations of the present disclosure can be described in view of the following example clauses. The features recited in the below example implementations can be combined with additional features disclosed herein. Furthermore, additional inventive combinations of features are disclosed herein, which are not specifically recited in the below example implementations, and which do not include the same features as the specific implementations below. For sake of brevity, the below example implementations do not identify every inventive aspect of this disclosure. The below example implementations are not intended to identify key features or essential features of any subject matter described herein. Any of the example clauses below, or any features of the example clauses, can be combined with any one or more other example clauses, or features of the example clauses or other features of the present disclosure.

Clause 1. A computerized method, performed by a computing system having one or more hardware computer processors and one or more non-transitory computer readable storage device storing software instructions executable by the computing system to perform the computerized method comprising: providing an agent service that utilizes a plurality of agents to process one or more tasks, wherein a first agent of the plurality of agents is configurable through a first set of settings and a second agent of the plurality of agents is configurable through a second set of settings; receiving, by the first agent, a request to perform a first task; obtaining, by the first agent, a first accessory to perform the first task, wherein the first accessory includes information for performing the first task; assigning, by the first agent, at least a portion of the first task to the second agent; sharing, by the first agent, the first accessory to the second agent; and processing, by the second agent, at least the portion of the first task using the first accessory to generate a processing result.

Clause 2. The computerized method of Clause 1, wherein the first accessory is generated by the first agent or by a user.

Clause 3. The computerized method of Clause 1, wherein the first set of settings are associated with at least one of: a large language model (LLM), an ontology, a version identification number, one or more available tools, one or more available agents to handoff tasks, or a handoff depth.

Clause 4. The computerized method of Clause 1, wherein the first accessory comprises electronic data including at least a portion of: a text, a document, an email, an image, an audio, a video, or metadata.

Clause 5. The computerized method of Clause 1, wherein sharing the first accessory to the second agent comprises: storing, by the first agent, the first accessory to an agent storage; and providing, to the second agent, a pointer to the first accessory stored in the agent storage.

Clause 6. The computerized method of Clause 5, further comprising: determining that one or more criteria to remove the first accessory from the agent storage is satisfied; and in response to determining that the one or more criteria to remove the first accessory from the agent storage is satisfied, remove the first accessory from the agent storage.

Clause 7. The computerized method of Clause 6, wherein the one or more criteria include at least one of: a time-to-live constraint of the first accessory or a data retention policy of the first agent.

Clause 8. The computerized method of Clause 1, further comprising: receiving, by an agent coordinator, the request to perform the first task from a user via a user interface; and transmitting, by the agent coordinator, the request to perform the first task to the first agent.

Clause 9. The computerized method of Clause 8, further comprising: returning, by the second agent, the processing result to the first agent; transmitting, by the first agent, the processing result to the agent coordinator; and providing, by the agent coordinator, the processing result via a user interface to a user.

Clause 10. The computerized method of Clause 8, further comprising: transmitting, by the first agent, a message to the agent coordinator; and providing, by the agent coordinator, the message via a user interface to a user, wherein the message prompts the user to perform one or more operations .

Clause 11. The computerized method of Clause 10, further comprising: receiving, by the agent coordinator via the user interface, a user input indicating that the one or more operations are completed; and transmitting, by the agent coordinator, the user input to the first agent.

Clause 12. The computerized method of Clause 1, further comprising: generating a run log that includes at least one of: the processing result, the first accessory, one or more operations performed by the first agent, timestamps of the one or more operations performed by the first agent, one or more operations performed by the second agent, or timestamps of the one or more operations performed by the second agent; and storing the run log as a data object in a database.

Clause 13. The computerized method of Clause 1, further comprising: generating one or more graphical user interfaces that include at least one of: a lineage of the first agent, a lineage of the second agent, and a lineage of the first accessory.

Clause 14. The computerized method of Clause 13, wherein the one or more graphical user interfaces include a first node representing the first agent, a second node representing the second agent, and an edge connecting the first node and the second node, wherein the edge indicates that the second agent is a child-agent of the first agent.

Clause 15. The computerized method of Clause 13, wherein the first accessory is generated by the first agent based on a second accessory, and wherein the one or more graphical user interfaces include a first node representing the first accessory, a second node representing the second accessory, and an edge connecting the first node and the second node, and wherein the edge indicates that the first accessory is generated based on the second accessory.

Clause 16. The computerized method of Clause 13, wherein the one or more graphical user interfaces include a number of errors committed by the first agent while processing the first task, and a number of errors committed by the second agent while processing the first task.

Clause 17. A system comprising: a computer readable storage medium having program instructions embodied therewith; and one or more processors configured to execute the program instructions to cause the system to perform the computerized method of any of Clauses 1-16.

Clause 18. A computer program product comprising a computer-readable storage medium having program instructions embodied therewith, the program instructions executable by one or more processors to cause the one or more processors to perform the computerized method of any of Clauses 1-16.

## Claims

1. A computerized method, performed by a computing system having one or more hardware computer processors and one or more non-transitory computer readable storage device storing software instructions executable by the computing system to perform the computerized method comprising:
providing an agent service that utilizes a plurality of agents to process one or more computational tasks, wherein a first agent of the plurality of agents is configurable through a first set of settings and a second agent of the plurality of agents is configurable through a second set of settings;
receiving, by the first agent, a request to perform a first computational task;
obtaining, by the first agent, a first accessory to perform the first computational task, wherein the first accessory includes information for performing the first computational task;
assigning, by the first agent, at least a portion of the first computational task to the second agent;
sharing, by the first agent, the first accessory to the second agent; and
processing, by the second agent, at least the portion of the first computational task using the first accessory to generate a processing result.

2. The computerized method of Claim 1, wherein the first accessory is generated by the first agent or by a user.

3. The computerized method of Claim 1 or claim 2, wherein the first set of settings are associated with at least one of: a large language model (LLM), an ontology, a version identification number, one or more available tools, one or more available agents to handoff tasks, or a handoff depth.

4. The computerized method of any preceding Claim, wherein the first accessory comprises electronic data including at least a portion of: a text, a document, an email, an image, an audio, a video, or metadata.

5. The computerized method of any preceding Claim, wherein sharing the first accessory to the second agent comprises:
storing, by the first agent, the first accessory to an agent storage; and
providing, to the second agent, a pointer to the first accessory stored in the agent storage.

6. The computerized method of Claim 5, further comprising:
determining that one or more criteria to remove the first accessory from the agent storage is satisfied; and
in response to determining that the one or more criteria to remove the first accessory from the agent storage is satisfied, remove the first accessory from the agent storage.

7. The computerized method of Claim 6, wherein the one or more criteria include at least one of: a time-to-live constraint of the first accessory or a data retention policy of the first agent.

8. The computerized method of any preceding Claim, further comprising:
receiving, by an agent coordinator, the request to perform the first computational task from a user via a user interface; and
transmitting, by the agent coordinator, the request to perform the first computational task to the first agent.

9. The computerized method of Claim 8, further comprising:
returning, by the second agent, the processing result to the first agent;
transmitting, by the first agent, the processing result to the agent coordinator; and
providing, by the agent coordinator, the processing result via a user interface to a user.

10. The computerized method of Claim 8, further comprising:
transmitting, by the first agent, a message to the agent coordinator; and
providing, by the agent coordinator, the message via a user interface to a user,
wherein the message prompts the user to perform one or more operations.

11. The computerized method of Claim 10, further comprising:
receiving, by the agent coordinator via the user interface, a user input indicating that the one or more operations are completed; and
transmitting, by the agent coordinator, the user input to the first agent.

12. The computerized method of any preceding Claim, further comprising:
generating a run log that includes at least one of: the processing result, the first accessory, one or more operations performed by the first agent, timestamps of the one or more operations performed by the first agent, one or more operations performed by the second agent, or timestamps of the one or more operations performed by the second agent; and
storing the run log as a data object in a database.

13. The computerized method of any preceding Claim, further comprising:
generating one or more graphical user interfaces that include at least one of: a lineage of the first agent, a lineage of the second agent, and a lineage of the first accessory, wherein optionally the one or more graphical user interfaces include a first node representing the first agent, a second node representing the second agent, and an edge connecting the first node and the second node, wherein the edge indicates that the second agent is a child-agent of the first agent, wherein optionally the first accessory is generated by the first agent based on a second accessory, and wherein the one or more graphical user interfaces include a first node representing the first accessory, a second node representing the second accessory, and an edge connecting the first node and the second node, and wherein the edge indicates that the first accessory is generated based on the second accessory, and wherein optionally the one or more graphical user interfaces include a number of errors committed by the first agent while processing the first computational task, and a number of errors committed by the second agent while processing the first computational task.

14. A system comprising:
a computer readable storage medium having program instructions embodied therewith; and
one or more processors configured to execute the program instructions to cause the system to perform the computerized method of any preceding Claim.

15. A computer program product comprising a computer-readable storage medium having program instructions embodied therewith, the program instructions executable by one or more processors to cause the one or more processors to perform the computerized method of any of Claims 1 to 13.
